# FASCICULE DE BREVET EUROPEEN

(11) **EP 2 454 149 B1**
(45) Date de publication et mention de la délivrance du brevet: **09.07.2014**
(21) Numéro de dépôt: 10734270.1
(22) Date de dépôt: 18.06.2010
(51) Int. Cl.: B63B 9/06, B63B 35/00, F03D 1/00

(54) **BATEAU DE TYPE CATAMARAN UTILE POUR L'ASSEMBLAGE, LE TRANSPORT ET LA DÉPOSE AU FOND DE LA MER D'ÉOLIENNE MARITIME**
KATAMARAN FÜR MONTAGE, TRANSPORT UND INSTALLATION EINER MEERESWINDKRAFTANLAGE AUF DEM MEERESBODEN
CATAMARAN SHIP USED FOR ASSEMBLING, TRANSPORTING AND INSTALLING A MARINE WIND TURBINE ON THE SEAFLOOR

(30) Priorité: 15.07.2009 FR 0954884
(43) Date de publication de la demande: 23.05.2012
(73) Titulaire: Saipem SA, 78180 Montigny-le-Bretonneux (FR)
(72) Inventeur: TOSELLO, André, F-92290 Chatenay-malabry (FR)
(74) Mandataire: Domange, Maxime
(86) Numéro de dépôt international: PCT/FR2010/051224
(87) Numéro de publication internationale: WO 2011/007066

(56) Documents cités:
- WO-A1-03/055741
- WO-A1-03/066426
- WO-A1-03/066427
- WO-A1-2008/071861
- US-A1- 2003 192 465
- US-A1- 2004 262 926

## Description

La présente invention est relative aux éoliennes installées au large des côtes, en particulier en mer.

Plus particulièrement, le domaine technique de l'invention est celui de la fabrication, du transport et de l'installation d'éoliennes de production d'énergie électrique, plus particulièrement d'éoliennes offshore de très grande capacité, destinées à être installées en mer, plus particulièrement au large des côtes et en grand nombre, pour former des champs d'éoliennes.

Alors que des moteurs à vent terrestres sont construits depuis plusieurs siècles, la construction d'éoliennes en mer est beaucoup plus récente.

Une éolienne moderne, tant terrestre que marine, comporte généralement un moteur à plusieurs pales et à axe horizontal, ainsi qu'un générateur électrique accouplé au moteur, qui sont fixés à l'extrémité supérieure d'un support allongé verticalement tel qu'un mât ou pylône.

Dans le but de diminuer le coût de l'énergie éolienne et d'augmenter le rendement des générateurs, on fabrique des générateurs de plus en plus puissants que l'on installe de façon groupée pour former un champ ou ferme éolien(ne).

L'augmentation de la puissance d'un générateur éolien s'accompagne notamment d'une augmentation de sa masse ainsi que de la hauteur de la structure le supportant.

Pour des raisons économiques, on est conduit à mettre en oeuvre des éoliennes de plus en plus puissantes et donc de plus en plus grandes dimensions, notamment de hauteur de plus en plus grande. De même, ces éoliennes sont installées à des distances de plus en plus éloignées des côtes et donc à des profondeurs de plus en plus grandes.

L'invention s'applique particulièrement, c'est-à-dire non limitativement, aux éoliennes comportant un générateur dont la puissance est située dans une plage allant de 100kW à 10 MW ; la masse d'un tel générateur peut atteindre ou dépasser 300 ou 500 tonnes ; la longueur d'un pylône supportant ce générateur peut être de l'ordre de 50 à 100 mètres, et la masse du pylône peut être située dans une plage allant de 100 à 500 tonnes.

On comprend donc que la construction de telles éoliennes et l'installation en mer présente de grandes difficultés. On a proposé différentes solutions pour la construction et l'installation des éoliennes offshore.

La construction d'éolienne s'effectue en général à l'aide de moyens de levage par traction conventionnelle avec des engins de levage du type grue. On réalise l'assemblage d'une embase surmontée d'un pylône au sommet duquel est fixé un moteur à vent et générateur électrique.

Toutefois, les éoliennes une fois construites représentent de grandes dimensions et des charges importantes comme mentionné ci-dessus, de sorte que ces éoliennes ne sont pas faciles à transporter en mer sur leur site d'opérations.

D'autre part, on comprend que l'installation d'éolienne à l'aide de grues agissant par traction requiert des grues de grandes dimensions, et notamment d'une hauteur supérieure à celle de l'éolienne. Pour des éoliennes des dimensions mentionnées ci-dessus, il est nécessaire de mettre en oeuvre des grues d'au moins 350 tonnes munies de flèche de levage d'au moins 50m, généralement de près de 100 m de long, de telles grues étant difficiles à monter et à déplacer, notamment à transporter et à opérer en mer. On ne peut pas raisonnablement envisager de transporter de tels moyens de levage du type grue sur des barges flottantes, comme cela peut être le cas dans certaines opérations des champs pétroliers offshore, compte tenu de l'encombrement qu'elles représenteraient et de l'instabilité de la barge dans une mer agitée, et ce, aussi bien pendant le transport que pendant les opérations de levage.

Des éoliennes maritimes ont été décrites dans WO 01/34977 et WO 03/004870 par exemple. Elles sont montées à terre puis transportées par bateau sur leur site d'opération en mer au large des côtes. Dans WO 01/34977 l'éolienne comporte des caissons étanches que l'on peut ballaster avec de l'eau de mer ou déballaster pendant son transport. Plus particulièrement, le navire comporte une fente étroite dont la largeur permet d'y insérer seulement le pylône, l'embase de l'éolienne étant quant à elle dessous la coque du navire, et partiellement ballastée de manière à ce que sa face supérieure exerce une poussée sur la face inférieure de la coque du navire de par sa flottabilité. Mais, pendant son transport, la fixation de l'éolienne au navire n'est pas fiable et requiert des conditions de mer très calme d'une part, et d'autre part la fixation du pylône sur l'embase subit des contraintes importantes, pouvant affecter la fiabilité mécanique de ladite fixation. De plus, les effets de la houle et du courant sur l'embase durant le transport, créent des efforts considérables, donc des moments fléchissants considérables au niveau du dispositif de préhension du pylône, solidaire du navire, ce qui nécessite des renforts localisés importants au niveau du système de préhension. Enfin, l'éolienne n'est pas guidée de manière stabilisée lorsqu'elle est ballastée pour être posée au fond de la mer.

Dans WO 03/055741 on décrit un bateau de type catamaran comprenant deux flotteurs latéraux constituant une structure flottante en forme de U, apte à transporter et déposer une éolienne en mer disposée entre les deux flotteurs latéraux. Le bateau est équipé de dispositifs de levage/descente de ladite éolienne, ledit dispositif de levage/descente et/ou ladite éolienne étant en mouvement relatif vertical par rapport aux deux flotteurs latéraux pour la dépose de l'éolienne depuis la surface jusque vers le fond de la mer. Ce dispositif de levage/descente de l'éolienne, ainsi que des moyens de maintien et de guidage de ladite éolienne entre les deux flotteurs latéraux, représentent un encombrement et un poids importants sur le pont de la structure flottante en forme de U. WO 03/055741 est considéré comme l'art antérieur le plus proche de l'objet de la revendication et décrit toutes les caractéristiques techniques de son préambule.

Le but de la présente invention est donc de fournir un procédé d'assemblage, de transport et de dépose en mer d'une éolienne offshore qui soit amélioré et qui remédie au moins en partie aux inconvénients des procédés d'assemblage, transport et dépose au fond de la mer d'éoliennes maritimes connus à ce jour.

Plus particulièrement, la présente invention vise à faciliter l'installation d'une éolienne sur son site de production, en particulier sur un site immergé loin des côtes, proposant une éolienne plus simple à construire et à installer.

Pour ce faire, la présente invention fournit un bateau de type catamaran utile pour l'assemblage, le transport et la dépose au fond de la mer et d'éoliennes maritimes, comprenant au moins :
- une embase destinée à reposer ou à être ancrée au fond de la mer,
- un pylône pouvant être supporté par ladite embase, de préférence l'extrémité inférieure étant encastrée dans ladite embase, et
- un moteur à vent pouvant équiper ledit pylône à son sommet,
- ledit bateau comprenant deux flotteurs latéraux dont les axes longitudinaux dans la direction longitudinale XX' sont disposés parallèlement, lesdits flotteurs latéraux étant réunis entre eux par une structure transversale de liaison, de préférence un flotteur transversal avant s'étendant dans une direction YY' perpendiculaire à ladite direction longitudinale XX', réunissant entre eux à une de leurs extrémités les deux flotteurs latéraux de manière à constituer une structure flottante en forme de U, et
- l'espace ouvert entre les deux branches du U constituées par les deux flotteurs latéraux, étant apte à recevoir une dite embase, de préférence d'au moins 20 m de large lesdits flotteurs étant équipés de moyens de préhension aptes à réaliser la préhension de ladite embase entre les deux dits flotteurs latéraux, lesdits flotteurs latéraux comprenant des compartiments étanches aptes à être ballastés et déballastés, de préférence avec de l'eau de mer, caractérisé en ce que lesdits moyens de préhension sont aptes à réaliser une préhension de ladite embase à au moins deux niveaux de préhension différents suivants :
- un niveau supérieur de préhension dans lequel il est possible de réaliser la préhension de ladite embase lorsque le fond de ladite embase est au-dessus du fond des dits flotteurs latéraux, de préférence le fond de l'embase étant au dessus niveau de l'eau, et que lesdits deux flotteurs latéraux sont au moins partiellement déballastés, et
- un niveau inférieur de préhension et de verrouillage dans lequel le fond de l'embase est situé au-dessous du fond des dits flotteurs latéraux, lesdits moyens de préhension de l'embase au dit niveau inférieur comprenant des moyens de verrouillage de l'embase aptes à réaliser un liaison rigide entre lesdits flotteurs latéraux et ladite embase.

On comprend que ladite liaison rigide opérée par lesdits moyens de verrouillage empêche tout mouvement relatif vertical et tout mouvement relatif horizontal de ladite embase par rapport aux dits flotteurs latéraux.

Du fait de l'écartement important entre les flotteurs latéraux, puisque ceux-ci sont aptes à recevoir ladite embase de l'éolienne dans l'espace ouvert entre les deux flotteurs latéraux, ce qui représente une distance entre les deux flotteurs latéraux en général d'au moins 20 m, de préférence de 30 à 50 m, un bateau de type catamaran selon l'invention présente une grande stabilité, ce qui lui permet d'opérer de manière stable pour déplacer des éoliennes de plus de 100 m de haut avec des tirants d'eau extrêmement faibles ou extrêmement importants dans des conditions suffisantes de sécurité. Ainsi, le catamaran selon l'invention peut être opérationnel dans un spectre plus étendu de possibilités de manutention au port, notamment pour récupérer les embases sur un quai ou ponton en opérant à tirant d'eau minimal, et pour la dépose d'éoliennes à des profondeurs relativement importantes en opérant avec un tirant d'eau maximal.

Plus particulièrement, l'embase peut être appréhendée à un dit niveau de préhension supérieur par le catamaran notamment pour la manutentionner depuis un quai ou ponton du port vers une zone d'assemblage dans le port.

Du fait de la forme en U d'un tel catamaran, ce dernier présente en général une rigidité en torsion autour de son axe longitudinal horizontal central XX relativement faible, quelque soient les renforcements des assemblages entre les différents flotteurs. Le fait d'encastrer le catamaran dans l'embase au moyen de verrouillages mécaniques puissants, tant dans le plan horizontal que dans le plan vertical, augmente drastiquement la rigidité en torsion de l'ensemble.

Selon la présente invention, il est possible de réaliser la descente au fond de la mer de ladite éolienne, uniquement par ballastage desdits flotteurs latéraux, lorsque ladite embase est verrouillée au dit niveau inférieur de préhension, sans recours à des moyens de levage/descente de l'éolienne par mouvement relatif de l'éolienne par rapport aux dits flotteurs latéraux pour la dépose de l'éolienne au fond de la mer.

On comprend donc que, lors de la dépose de l'embase depuis la surface ou subsurface jusqu'au fond de la mer, une fois lesdits moyens de verrouillage mis en oeuvre, il n'y a pas de mouvement relatif des différents éléments constitutifs desdits moyens de préhension et/ou desdits moyens de verrouillage entre eux et il n'y a pas de mouvement relatif de ladite embase par rapport aux dits flotteurs latéraux pour réaliser ladite dépose, celle-ci étant réalisée entièrement par ballastage desdits flotteurs latéraux.

Ainsi, la conception du catamaran selon l'invention s'en trouve radicalement simplifiée et nécessite moins de renforcements dans la liaison entre les différents flotteurs, réduisant de ce fait considérablement le coût et la complexité de construction d'un tel catamaran.

Du fait des dits moyens de verrouillage, le catamaran peut s'encastrer dans l'embase, et l'ensemble catamaran-embase présente alors une grande rigidité d'ensemble à un dit niveau de préhension inférieur pour effectuer en toute sécurité le transport sur site de l'éolienne à son tirant d'eau H₁ de stabilité optimale, puis effectuer la dépose de l'embase sur le fond de la mer en ballastant lesdits flotteurs de manière à ce que le catamaran adopte un tirant d'eau maximal H₂.

Le bateau de type catamaran selon la présente invention est particulièrement avantageux en ce qu'il permet de réaliser une liaison rigide entre l'éolienne et ledit bateau adaptée selon les différents stades de manutention, assemblage ou transport de l'éolienne par la mise en oeuvre de l'un des dits niveaux de préhension explicités plus avant dans la description.

Plus particulièrement, lesdits moyens de verrouillage comprennent :
- des moyens de serrage verticaux, coopérant avec ladite embase et chacun des deux flotteurs latéraux, aptes à bloquer tout mouvement vertical relatif de l'embase par rapport à chacun desdits flotteurs latéraux, et
- des moyens de serrage horizontaux, coopérant avec ladite embase et chacun des deux flotteurs latéraux, aptes à bloquer tout mouvement horizontal relatif de l'embase par rapport à chacun desdits flotteurs latéraux.

Plus particulièrement encore :
- lesdits moyens de préhension au dit niveau supérieur de préhension comprennent des éléments de structure renforcée supérieurs de ladite, embase, aptes à venir en appui et être supportés par des éléments de structure renforcée supérieurs de chacun des deux flotteurs latéraux, lorsque lesdits deux flotteurs latéraux sont au moins partiellement déballastés, le fond de ladite embase étant situé au-dessus du fond de chacun des deux flotteurs latéraux, et
- lesdits moyens de préhension et verrouillage au dit niveau inférieur de préhension comprennent :
   - des moyens supérieurs de serrage verticaux, aptes à plaquer en force verticalement des éléments de structure renforcée supérieurs de ladite embase contre des éléments de structure renforcée inférieurs de chacun desdits flotteurs latéraux, et
   - des moyens inférieurs de serrage horizontaux, aptes à exercer des poussées horizontales en sens inverse entre chacune des deux parois latérales externes opposées de ladite embase et, respectivement, chacun des deux bordés internes de chacun desdits flotteurs latéraux en vis-à-vis, empêchant ainsi tout mouvement relatif horizontal de ladite embase par rapport aux dits flotteurs latéraux.

On comprend que "poussée en sens inverse" signifie que la poussée entre une première paroi latérale d'embase et un premier bordé interne d'un premier flotteur latéral s'effectue en sens inverse de celle entre la deuxième paroi latérale de l'embase et le bordé interne du deuxième flotteur latéral.

Dans un mode préféré de réalisation, lesdits flotteurs latéraux sont surmontés par des structures supérieures de flottaison dénommées cheminées de section horizontale inférieure à la section des dits flotteurs latéraux au-dessus desquels ils s'élèvent sur une hauteur h₃ telle que lorsque lesdits flotteurs latéraux sont en position totalement immergée de ballastage maximal, l'extrémité supérieure des dites cheminées dépasse au-dessus du niveau de l'eau.

Ces éléments de flottaison en forme de cheminées permettent de déposer ladite éolienne au fond de la mer en la maintenant verrouillée sur ledit catamaran et en ballastant les flotteurs latéraux, ainsi que, le cas échéant, les cheminées de manière partielle, lesdites cheminées assurant de par leur flottabilité positive une stabilisation de l'ensemble lors de la descente au fond de la mer du catamaran et de l'éolienne pour réaliser la dépose de l'éolienne au fond de la mer.

Ce mode de réalisation est particulièrement avantageux, car l'ajout de cheminées éloignées les unes des autres et situées aux extrémités du catamaran réduit radicalement la hauteur de la coque principale dudit catamaran, donc son poids propre et son coût, tout en conservant une grande latitude entre le tirant d'eau minimum et maximum, permettant de ce fait de déposer en toute sécurité l'embase sur site dans des profondeurs d'eau très importantes.

Avantageusement, le bateau de type catamaran selon l'invention comporte au moins trois cheminées, dont une cheminée sensiblement dans l'axe dudit bateau au milieu dudit flotteur transversal et deux cheminées à l'extrémité arrière libre de chacun des deux flotteurs latéraux.

Ce mode de réalisation permet d'obtenir un espacement maximal des dites cheminées et contribuer ainsi à une meilleure stabilisation du bateau.

Selon d'autres caractéristiques particulières :
- la hauteur cumulée (h₃+h₄) des dits flotteurs latéraux h₄ et dites cheminées h₃ est telle que ledit catamaran peut adopter :
   - un tirant d'eau minimal H₀ dans lequel lesdits moyens de préhension supérieurs et/ou la surface supérieure des dits flotteurs latéraux sont à une hauteur d'au moins 5 m, de préférence au moins 10 m au-dessus du niveau de l'eau, et
   - un tirant d'eau maximal H₂ d'au moins 25 m, de préférence au moins 50 m, dans lequel lesdits flotteurs latéraux sont totalement immergés et l'extrémité supérieure des dites cheminées reste émergée.
- la hauteur h₄ des dits flotteurs latéraux est d'au moins 5 m, de préférence de 5 à 15 m, et
- la hauteur h₃ des dites cheminées est d'au moins 15 m, de préférence de 15 à 35 m.

Plus particulièrement encore, lesdits moyens de préhension comprennent :
- des premiers éléments de structure renforcée supérieurs, de préférence en forme de platines s'étendant dans la direction longitudinale XX' des dits flotteurs latéraux le long des bords supérieurs des bordés internes des dits flotteurs latéraux dont ils sont solidaires, de préférence encore dépassant vers ledit espace ouvert du U, et
- des deuxièmes éléments de structure inférieurs solidaires des dits bordés internes des flotteurs latéraux et situés en dessous des dits premiers éléments de structure renforcée supérieurs, et
- des troisièmes éléments de structure renforcée solidaires de ladite embase, s'étendant le long des bords supérieurs opposés des parois latérales externes de ladite embase, de préférence des bords supérieurs des parois externes opposées et parallèles d'une dite embase parallélépipédique, dépassant vers l'extérieur de celles-ci, de telle sorte que :
   ■ lesdits premiers éléments de structure renforcée supérieurs des dits flotteurs latéraux sont aptes à supporter lesdits troisièmes éléments de structure renforcée supérieurs de ladite embase pour réaliser une préhension à un dit niveau supérieur de préhension, lorsque ladite embase est insérée entre les deux dits flotteurs latéraux et que les deux dits flotteurs latéraux sont partiellement déballastés pour exercer une poussée vers le haut des dits premiers éléments de structure renforcée supérieurs des flotteurs latéraux contre lesdits troisièmes éléments de structure renforcée supérieurs de ladite embase, et
   ■ lesdits deuxièmes éléments de structure renforcée inférieurs des dits flotteurs latéraux sont aptes à supporter des dits troisièmes éléments de structure renforcée supérieurs de ladite embase pour réaliser une préhension à un dit niveau inférieur de préhension lorsque ladite embase est insérée entre les deux flotteurs latéraux et que lesdits flotteurs latéraux sont partiellement déballastés pour exercer une poussée vers le haut des dits deuxièmes éléments de structure renforcée inférieurs des flotteurs latéraux contre lesdits troisièmes éléments de structure renforcée supérieurs de ladite embase.

On entend ici par « renforcée » que l'épaisseur des dits éléments de structure est supérieure à l'épaisseur les autres parties et/ou éléments de structure constituant des flotteurs latéraux ou respectivement embase sur lesquels ils sont appliqués ou avec lesquels ils coopèrent, ou encore qu'ils comportent des goussets ou tout autre type de renfort.

Plus particulièrement encore, lesdits moyens de verrouillage des moyens de préhension à un niveau inférieur de préhension comprennent :
- des moyens supérieurs de serrage verticaux dont une partie au moins est solidaire des dits premiers éléments de structure renforcée supérieurs, lesdits moyens supérieurs de serrage verticaux étant aptes à plaquer en force lesdits troisièmes éléments de structure renforcée supérieurs de l'embase contre lesdits deuxièmes éléments de structure renforcée des flotteurs latéraux, de préférence en forme de redans, et
- des moyens inférieurs de serrage horizontaux dont une partie au moins est solidaire des bordés internes des dits flotteurs latéraux au-dessous des dits deuxièmes éléments de structure renforcée inférieures des flotteurs, de préférence en forme de redans, lesdits moyens inférieurs de serrage étant aptes à exercer une poussée sur lesdites parois latérales externes opposées de ladite embase.

Dans un premier mode de réalisation, lesdits deuxièmes éléments de structure inférieure sont des éléments de structure renforcée en forme de redan s'étendant dans la direction longitudinale XX' des dits flotteurs latéraux le long des dits bordés internes des flotteurs latéraux dont ils sont solidaires.

Dans un mode préféré de réalisation :
- lesdits moyens de serrage verticaux comprennent des vérins supérieurs de serrage verticaux dont le corps de vérin est solidaire des dits premiers éléments de structure renforcée supérieurs et dont l'extrémité de la tige des vérins est apte à plaquer en force lesdits troisièmes éléments de structure renforcée supérieurs de l'embase contre lesdits deuxièmes éléments de structure renforcée des flotteurs latéraux en forme de redans, et
- lesdits moyens inférieurs de serrage horizontaux comprennent des vérins inférieurs de serrage horizontaux dont le corps de vérin est solidaire des bordés internes des dits flotteurs latéraux au-dessous des dits deuxièmes éléments de structure renforcée inférieurs des flotteurs en forme de redans et dont les tiges de vérins s'étendent en extension en sens opposés de manière à exercer une poussée sur lesdites parois latérales externes opposées de ladite embase.

Ce mode de réalisation est avantageux, car après rétractation des dits vérins horizontaux et verticaux et seconds vérins horizontaux, il est possible de dégager le catamaran après dépose de l'embase au fond de la mer par simple élévation verticale résultant de l'augmentation du ballastage des flotteurs dudit catamaran, alors que dans la version dans laquelle les deuxièmes éléments de structure inférieure sont de simples redans sans butée articulée, il est nécessaire de déplacer le catamaran dans la direction longitudinale XX' des dits flotteurs pour le dégager de ladite embase avant de pouvoir le remonter en surface.

Plus particulièrement, lesdits deuxièmes éléments de structure inférieure comportent des redans dans les bordés internes des flotteurs latéraux, redans à l'intérieur desquels des butées articulées en rotation sont aptes à être articulés en rotation autour de leur base logée dans lesdits redans à l'aide de seconds vérins horizontaux, aptes à pousser l'extrémité supérieure des dites butées contre la sous-face des dits troisièmes éléments de structure renforcée supérieurs en forme d'oreilles latérales de ladite embase.

Le procédé selon l'invention permet des installations d'éolienne en mer à des distances éloignées des côtes et dans des profondeurs pouvant aller jusqu'à 35 m, voire 50m, sans difficulté.

Il permet aussi d'installer plus facilement des turbines de moteur à une altitude importante au dessus des flots, notamment supérieure à 100 m, ce qui permet d'accroître le diamètre du rotor et donc la puissance unitaire du moteur.

La présente invention fournit également un procédé de manutention et d'assemblage dans un port et/ou transport en mer et dépose au fond de la mer d'une éolienne maritime, comprenant au moins :
- une embase destinée à reposer ou à être ancrée au fond de la mer,
- un pylône pouvant être supporté par ladite embase, de préférence son extrémité inférieure étant encastrée dans ladite embase, et
- un moteur à vent pouvant équiper ledit pylône à son sommet,
à l'aide d'un bateau de type catamaran selon l'invention, caractérisé en ce que l'on réalise les étapes initiales successives dans lesquelles :
1) on réalise la préhension de ladite embase seule à l'aide d'un dit bateau de type catamaran, dont lesdits moyens de préhension réalisent la préhension de ladite embase à un dit niveau supérieur de préhension, le fond de ladite embase étant situé au-dessus du niveau de l'eau, de préférence sur un ponton d'un quai du port, et
2) de préférence, on soulève ladite embase par rapport au dit ponton en déballastant davantage lesdits flotteurs, et
3) on déplace ladite embase en déplaçant ledit bateau dans le port, et
4) on dépose ladite embase sur une structure support dénommée « tabouret » reposant au fond du port en ballastant lesdits flotteurs, et
5) on dégage ledit catamaran par rapport à ladite embase, et
6) on réalise l'assemblage d'un dit pylône sur ladite embase, de préférence par encastrement de son extrémité inférieure sur ladite embase et on fixe ledit moteur à vent au sommet dudit pylône à l'aide d'une dite grue, et
7) on réalise la préhension de ladite embase équipée de ladite éolienne, à un dit niveau inférieur de préhension, le fond de ladite embase étant immergé,
8) puis, on transporte en mer ladite embase équipée de ladite éolienne, avec ledit catamaran, avant de la déposer au fond de la mer, et
9) on ballaste lesdits flotteurs de manière à les immerger totalement et on dépose ladite embase sur son site d'implantation au fond de la mer, et
10) on dégage ledit catamaran par rapport à ladite embase en déverrouillant lesdits moyens de verrouillage, puis en déplaçant ledit catamaran et en le remontant, en diminuant son tirant d'eau par déballastage au moins partiel de ses dits flotteurs.

Plus particulièrement, dans le procédé de manutention, d'assemblage et transport selon l'invention, on transporte une dite éolienne assemblée depuis son site d'assemblage dans le port jusqu'à un site d'implantation en mer à l'aide d'un dit bateau du type catamaran, en réalisant les étapes suivantes successives dans lesquelles :
1) on saisit ladite éolienne au niveau de sa dite embase reposant sur un dit tabouret à l'aide des dits moyens de préhension à un dit niveau inférieur de préhension, et on réalise le verrouillage des dits moyens de préhension de manière à ce que la liaison entre ladite embase et lesdits flotteurs latéraux soit une liaison rigide, et
2) de préférence, on soulève ladite éolienne de manière à ce que le fond de sa dite embase se dégage dudit tabouret en déballastant davantage lesdits flotteurs, et
3) on déplace ladite éolienne dont l'embase est ainsi verrouillée jusqu'à son site d'implantation en mer, de préférence lesdits flotteurs étant ballastés avec un tirant d'eau intermédiaire H₁, et
4) on ballaste lesdits flotteurs de manière à les immerger totalement et on dépose ladite embase sur son site d'implantation au fond de la mer, et
5) on dégage ledit catamaran par rapport à ladite embase en déverrouillant lesdits moyens de verrouillage, puis en déplaçant ledit catamaran et en le remontant, en diminuant son tirant d'eau par déballastage au moins partiel de ses dits flotteurs.

Plus particulièrement, lesdits flotteurs comprennent des dites cheminées, celles-ci restant partiellement immergées lorsque l'on ballaste lesdits flotteurs latéraux pour descendre et reposer ladite embase au fond de la mer à une profondeur H'₂ d'au moins 20 m, de préférence au moins 50 m.

Avantageusement, on installe deux dits tabourets au fond du port, de manière à ce que la grue puisse réaliser l'assemblage d'une éolienne sur un premier tabouret pendant que ledit bateau catamaran transporte une éolienne préalablement assemblée depuis un deuxième tabouret sur lequel elle a été assemblée jusqu'à son site d'implantation, puis revient pour déposer une nouvelle embase sur ledit deuxième tabouret, et ladite grue pouvant alors réaliser l'assemblage d'une nouvelle éolienne sur ledit deuxième tabouret pendant que le même bateau de type catamaran réalise le transport puis la dépose de l'éolienne assemblée depuis le premier tabouret vers son site d'implantation, puis la manutention et la dépose d'une nouvelle embase sur ledit premier tabouret, et ainsi de suite.

D'autres caractéristiques et avantages de la présente invention apparaîtront à la lumière de la description qui va suivre, qui se réfère aux dessins annexés et qui illustre sans aucun caractère limitatif des modes préférentiels de réalisation de l'invention :
- les figures 1A et 1B sont respectivement des vues de dessus et de côté d'un site, situé à proximité d'un quai, de préfabrication à terre d'embase d'éolienne et d'assemblage d'éolienne avant transport sur le site d'installation en mer,
- les figures 2A-2B sont des vues de dessus d'un catamaran de transport d'embase d'éolienne respectivement en cours d'insertion autour de ladite embase et de préhension de ladite embase,
- la figure 2C est une vue de face, vue de l'arrière du catamaran, relative à la figure 2A illustrant les différents tirants d'eau lors des manutentions et du transport de l'éolienne et de son embase vers le site en mer,
- les figures 3a, 3b et 3C sont des vues de face illustrant le transfert de l'embase depuis un ponton (Fig. 3A) vers (Fig. 3B) un tabouret (Fig. 3C), au moyen d'un catamaran selon l'invention. Sur la figure 3B, l'embase est soulevée par rapport au ponton.
- la figure 4 est une vue de côté de l'installation des éléments de l'éolienne 1 sur une embase reposant sur un tabouret,
- la figure 5A est une vue de côté d'une éolienne complète reposant sur un tabouret, prise en charge par un catamaran, en cour de levage pour le dégager dudit tabouret, en vue de son transport sur le site,
- la figure 5B est une vue de côté illustrant le tirant d'eau moyen optimal du catamaran lors de l'opération de remorquage vers le site,
- la figure 5C est une vue de côté illustrant le tirant d'eau maximal du catamaran lors de l'opération de dépose de l'embase sur le site d'installation empierré,
- la figure 6 est une vue de côté d'un navire en train d'exécuter un empierrement du site d'installation, destiné à recevoir l'embase poids,
- la figure 7 est une coupe en vue de côté du catamaran détaillant un mode de saisissement préféré de l'embase à un niveau inférieur.

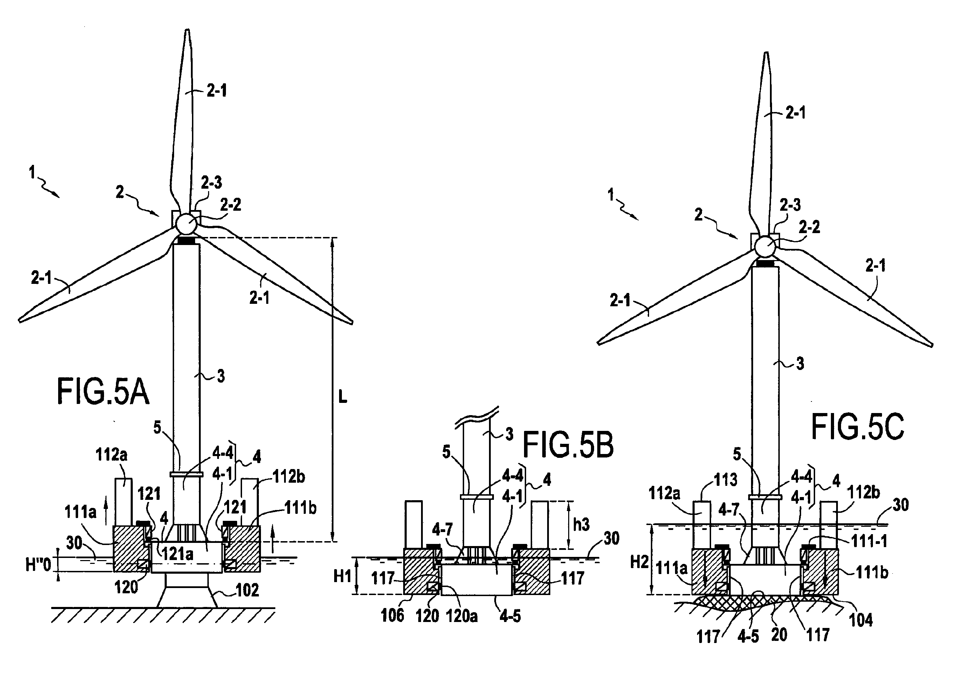

Sur la figure 5C on a représenté en vue de face une éolienne offshore 1 comportant un moteur à vent 2 comprenant une génératrice de courant 2-3, et un rotor à arbre rotatif 2-2 d'axe horizontal entraîné en rotation par ledit moteur 2 et supportant trois pales 2-1 à son extrémité. Ledit moteur 2 est installé au sommet d'un pylône 3, solidaire d'une embase gravitaire 4, lestée après installation sur site par des granulats de minéraux de fer de densité supérieure à 4 contenus à l'intérieur des caissons de l'embase 4.

L'embase 4 est constituée d'une structure inférieure parallélépipédique 4-1 présentant des caissons destinés à être remplis de lest sous forme de granulats à forte densité. Elle s'étend vers le haut sous la forme d'un puits 4-4 de hauteur H₁ liaisonné à la partie basse par des renforts de type goussets 4-7 et présentant en partie haute une plateforme périphérique renforcée 5, de préférence en structure mécano-soudée, dont le fonctionnement sera expliquée plus avant dans la description ci-après de l'invention. L'intérieur du puits 4-4 est de préférence circulaire et reçoit une partie inférieure du pylône 3 de l'éolienne. La partie inférieure du pylône 3 s'encastre dans le puits 4-4.

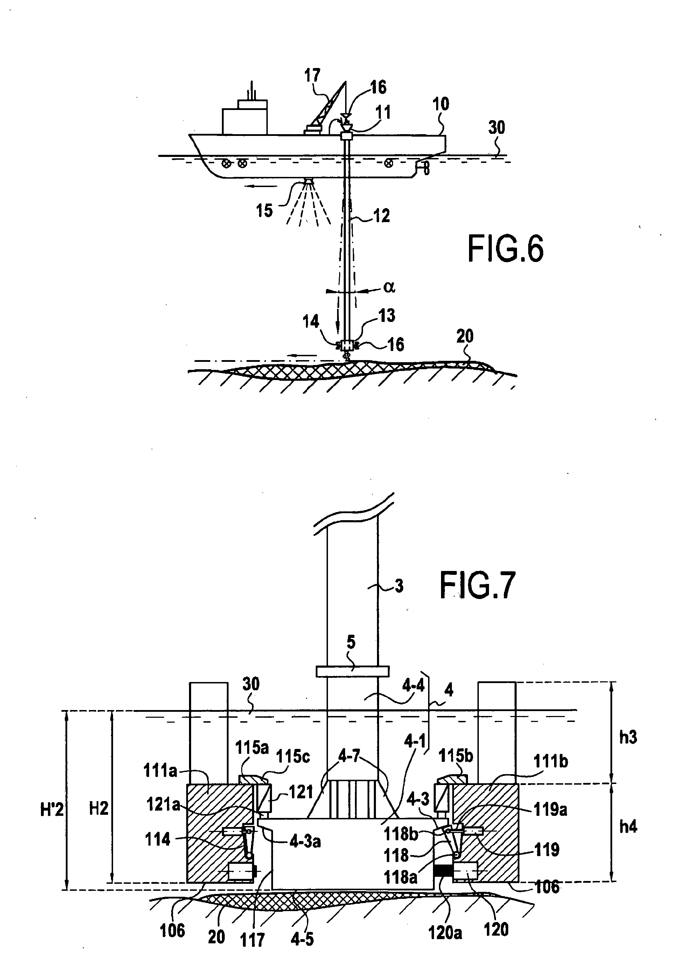

Le site d'installation est en général préparé, de manière connue, par empierrement 20 contrôlé depuis un navire de surface comme illustré sur la figure 6. A cet effet, un navire 10 de type vraquier, de préférence à positionnement dynamique est équipe sur le côté d'une trémie 11 reliée à une conduite légère 12 s'étendant vers le bas, 1 à 2m au dessus du fond marin. Un dispositif 13 équipé de propulseurs latéraux 14 et d'une caméra vidéo, non représentée, permet de déplacer en toutes directions l'extrémité inférieure de ladite conduite 12, de manière à ajuster précisément la zone vers laquelle les granulats 16 sont dirigés. Lesdits granulats sont chargés dans la trémie 11 par la grue 17, puis descendent le long de la conduite 12, pour se poser enfin sur la fondation 20. Le processus d'empierrement est contrôlé à bord du bateau par un sonar 15 à balayage latéral, connu de l'homme de l'art, et qui donne une représentation très précise de la surface empierrée. Avec de tels moyens il est possible de créer des plateformes empierrées de plusieurs mètres d'épaisseur sur des surfaces dépassant largement 1000m², et dont les variations maximales du niveau supérieur sont comprises entre 0.2m et 0.5m. On peut ainsi considérer que l'embase installée sur la fondation empierrée est sensiblement horizontale, mais l'installation proprement dite de l'embase, ainsi que son ballastage avec des granulats lourds ne manque pas de créer un léger enfoncement qui peut être différent entre la partie droite et la partie gauche. Il en résulte ainsi que l'axe ZZ de l'embase n'est plus exactement vertical, ce qui est préjudiciable au bon fonctionnement dans la durée de l'éolienne, et plus particulièrement au niveau de la tourelle d'orientation de la tête de rotor, vis-à-vis du pylône.

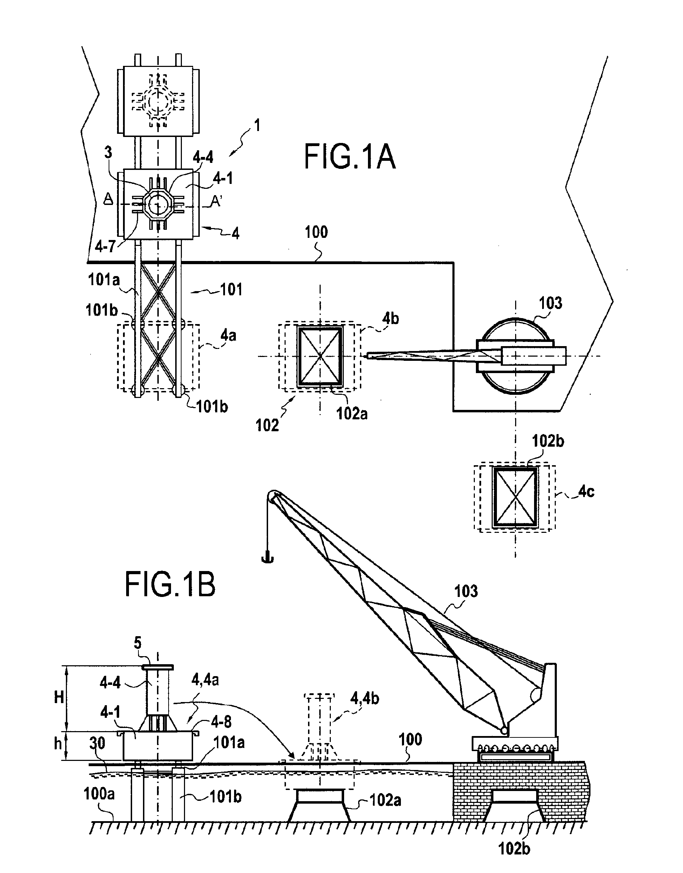

Sur les figures 1A et 1B, on a représenté respectivement en plan et en vue de côté, un site de préfabrication d'embases d'éoliennes et d'assemblage d'éoliennes complètes en vue d'être transportées complètement assemblées sur le champ d'installation.

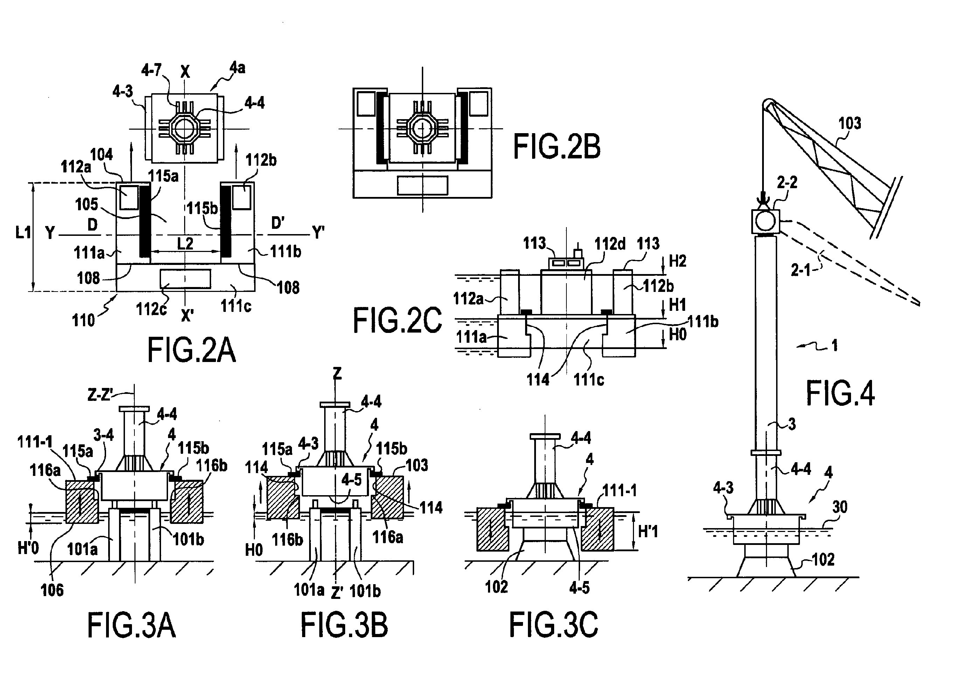

Ce site est de préférence situé dans un environnement portuaire. Il est constitué d'un quai 100 à fort tirant d'eau, les embases 4 sont préfabriquées à quai, de préférence les unes derrière les autre. Puis, chaque embase, une fois terminée, est ripée, de manière connue, sur un ponton 101 constitué de poutres horizontales 101a s'étendant depuis le quai jusqu'au dessus de l'eau, lesdites poutres étant soutenues au-dessus de la surface 30 de l'eau par des piles 101b reposant sur le fond du port 100a pour atteindre finalement une position 4a en bout de ponton 101. Dans cette position 4a, l'embase est reprise par un catamaran 110 représenté sur la figure 2A, pour être transférée sur un tabouret 102 reposant sur le fond du port 100a. Une fois sur le tabouret 102, le pylône 3 supportant le moteur à vent 2 et la génératrice électrique 2-3 est déposé sur l'embase 4 à l'aide d'une grue 103 puis encastré sur ladite embase.

Le catamaran 110 est composé d'une structure flottante en forme de U constituée de 2 flotteurs latéraux 111a-111b disposés parallèlement dans une direction longitudinale XX'. Les extrémités de chaque flotteur latéral 111a-111b situé d'un même côté sont reliées entre elles par une structure de liaison transversale 111c, de préférence un flotteur transversal 111c. Le catamaran 110 présente plusieurs cheminées de flottabilité 112a-112b-112c, de préférence positionnés au-dessus des dits flotteurs latéraux et transversaux, de préférence une cheminée par élément de flottabilité, de préférence le plus éloigné possible les unes des autres, afin d'augmenter leurs moments de rappel et donc la stabilité du catamaran. Cette disposition permet d'opérer le catamaran avec la possibilité d'une très grande variation du tirant d'eau. En effet, comme représenté sur la figure 2C qui est une vue de face, en vue de l'arrière, relative à la figure 2A, limitée au seul catamaran, ledit catamaran peut être opéré à deux tirants d'eau extrêmes H₀ et H₂ et à des niveaux intermédiaires H'₀, H"₀, H'₁ et H₁, ce dernier (H₁) correspondant à une stabilité d'ensemble optimale, stabilité requise lors du transport de l'éolienne complète vers le site d'installation en mer. Ces variations de tirants d'eau sont obtenues par ballastage et déballastage de compartiments répartis dans les divers éléments de flottabilité 111a-111b-111c ainsi que, le cas échéant, dans les cheminées 112a-112b-112c.

La répartition des cheminées et leur section propre, situées de préférence le plus éloigné possible les unes des autres, notamment aux extrémités 104 des flotteurs latéraux 111a et 111b et au milieu du flotteur transversal 111c, assure une stabilité suffisante du catamaran transportant l'éolienne complète avec son embase, lors des différentes phases de transport et d'installation sur site, tel que représenté sur les figures 5A à 5C, car les cheminées restent toujours au moins en partie émergées à leur extrémité supérieure 113.

Durant la phase de transport de l'éolienne complète en mer jusqu'à son site 20 (figure 5B), le tirant d'eau doit correspondre à une stabilité maximale, laquelle correspond au tirant d'eau moyen H₁ de la figure 2C, ce qui permet ainsi d'affronter en toute sécurité des conditions de mer sévères en termes de houle, de vent et de courant, voire même une tempête. Bien sûr, le transport sera effectué de préférence avec une couverture météo suffisante.

Le catamaran selon l'invention est capable d'effectuer avec des tirants d'eau différents, dans des conditions de sécurité excellentes, les opérations de transfert au port, puis les opérations de transport sur site, ainsi que les opérations d'installation sur site d'une éolienne complètement terminée.

Lors des manutentions de transfert au port de l'embase entre le ponton 101 et le tabouret 102, Fig. 3B, le catamaran est déjaugé au maximum depuis un tirant d'eau H'₀ jusqu'à un tirant d'eau minimal H₀ inférieur à H'₀, comme représenté sur la figure 3B. Puis, une fois dégagé du ponton, on peut le stabiliser à nouveau à un tirant d'eau intermédiaire supérieur à H₀. La stabilité de l'ensemble est alors en général suffisante, car les opérations sont réalisées en site portuaire, donc en site protégé.

En phase finale de dépose de l'éolienne au fond de la mer, Fig. 5C, le tirant d'eau des flotteurs latéraux est alors maximal et correspondant au tirant d'eau H₂ de la figure 2C. Cette stabilité est inférieure à la stabilité requise de l'ensemble lors du transport, mais suffisante pour une opération de dépose de l'éolienne et son embase effectuée par mer calme, du fait de la stabilisation apportée par les cheminées 112a-112b-112c.

Le catamaran 110 comporte deux dites premières structures renforcées supérieures 115a-115b, de préférence des structures métalliques en forme de platine disposées par-dessus la surface supérieure 111-1 des flotteurs latéraux 111a et 111b du côté de leur face interne ou bordés internes 114 vers l'intérieur du U, et donc situées en face à face dans le U, en partie haute des flotteurs latéraux 111a et 111b. De même, chacun des flotteurs latéraux 111a et 111b comporte en partie basse, également sur ces bordés internes 114 tournés vers l'espace ouvert 105 du U, c'est-à-dire en face à face à l'intérieur 105 du U, une structure renforcée inférieure 116a-116b en forme de redan. Lesdites premières structures renforcées supérieures 115a-115b et lesdits redans inférieurs 116a-116b collaborent ainsi avec des troisièmes structures renforcées supérieures de l'embase, nommées oreilles latérales renforcées 4-3 de l'embase 4, de manière effectuer les manutentions desdites embases.

Si, comme représenté sur les figures 3A à 3C, les oreilles 4-3 consistent en des extensions de structure s'étendant tout le long de deux bords supérieurs des parois latérales externes 117 opposées parallèles de la structure inférieure parallélépipédique 4-1 de l'embase 4, les structures renforcées supérieures 115a-115b et redans inférieurs 116a-116b destinés à coopérer avec lesdites oreilles 4-3 s'étendront également longitudinalement dans la direction XX, de manière à être aptes à soutenir lesdites oreilles 4-3 en contact avec leur sous-face 4-3a, le cas échéant selon le tirant d'eau adopté par lesdits flotteurs latéraux par ledit catamaran 110, comme explicité ci-après.

Lorsque l'embase terminée est en position 4a sur le ponton 101, comme détaillé sur la figure 1A, le catamaran vient s'insérer autour de ladite embase en position 4a sur le ponton comme détaillé sur la figure 2A. Puis, une fois inséré, figure 2B, le catamaran est déballasté de manière à ce que les structures renforcées 115a et 115b viennent en contact avec la sous-face 4-3a des oreilles 4-3 de l'embase 4, puis le déballastage est poursuivi jusqu'à ce que ce que l'embase soit soulevée (Fig. 3B) et ne soit plus en contact avec les poutres du ponton. Le catamaran recul alors et extrait l'embase du ponton, puis se déplace vers l'un des tabourets 102a-102b pour y déposer l'embase comme détaillé sur la figure 3C. Lorsque le catamaran est correctement positionné par rapport audit tabouret, l'embase étant à la verticale du tabouret, on ballaste au maximum le catamaran qui se trouve alors libéré du poids de l'embase dès que ladite embase repose sur ledit tabouret. On continue alors le déballastage et le catamaran peut alors se libérer de l'embase en reculant.

Une fois l'embase installée sur son tabouret 102, une grue 103 de grande capacité de charge et de grande hauteur installe alors successivement une partie inférieure du pylône 3 dans le puits ou fût 4-4 de l'embase 4, puis le reste du pylône 3, puis le générateur 2-3, le moteur 2 comprenant le rotor 2-2 et enfin les pales 2-1, comme représenté figure 4.

Une fois l'éolienne 1 complètement assemblée, comme représenté sur la figure 5A, elle est prise en charge à nouveau par le catamaran 110, mais cette fois au niveau des redans inférieurs 116a-116b venant en contact en sous-face 4-3a des oreilles 4-3. Le catamaran est alors déballasté pour atteindre un tirant d'eau réduit H'₀ ou H₀ de la figure 2C, 3A ou 3B, ce qui permet de soulever l'embase 4, donc l'éolienne complète et de la libérer du tabouret 102. Pour assurer une sécurité maximale lors du transport vers le site, l'embase est verrouillée latéralement par des dispositifs de serrage horizontaux 120 et verticaux 121, tels des vérins mécaniques ou hydrauliques solidaires de chacun des flotteurs latéraux. En particulier, les vérins verticaux 121 sont solidaires des structures supérieures latérales de renfort 115a-115b et les tiges 121a des vérins 121 en extension viennent appuyer sur la face supérieure de la structure inférieure 4-1 parallélépipédique de l'embase 4 ou de préférence viennent appuyer sur les faces supérieures des oreilles latérales 4-3, dont les sous-faces 4-3a sont retenues par les redans inférieurs 116a-116b respectivement. De même, les vérins horizontaux 120 sont solidaires des faces internes des flotteurs latéraux 111a et 111b en partie basse dessous les redans inférieurs 116a-116b et leur tige en extension vient en appui sur les faces latérales de ladite structure inférieure parallélépipédique 4-1 de l'embase 4. En actionnant les vérins horizontaux 120 de chaque flotteur 111a-111b positionnés en vis-à-vis sur chacun des flotteurs opposés, deux vérins horizontaux 120 en vis-à-vis exercent une poussée en sens inverse identique, de manière à encastrer la structure inférieure parallélépipédique 4-1 de l'embase sous l'effet de la poussée des tiges 120a des vérins horizontaux 120.

En procédant ainsi, le catamaran se trouve encastré sur l'embase, et présente alors une grande rigidité d'ensemble pour effectuer en toute sécurité le transport sur site de l'éolienne à un tirant d'eau intermédiaire H₁ des flotteurs du catamaran, correspondant à une stabilité optimale, puis d'effectuer sa dépose sur la fondation empierrée 20 en ballastant davantage les flotteurs de manière à ce que le catamaran adopte un tirant d'eau maximal H₂ tel que représenté sur la figure 5.

Du fait de la forme en U d'un tel catamaran, ce dernier présente en général une rigidité en torsion autour de son axe longitudinal horizontal central XX relativement faible, quelque soient les renforcements des assemblages entre éléments 111a, 111c et 111b. Le fait d'encastrer le catamaran dans l'embase au moyen de verrouillages mécaniques puissants 120,121, tant dans le plan horizontal que dans le plan vertical, augmente drastiquement la rigidité en torsion de l'ensemble.

Ainsi, la conception du catamaran s'en trouve radicalement simplifiée et nécessite moins de renforcements dans la liaison entre les éléments de flottaison 111a, 111c et 111b, réduisant de ce fait considérablement le coût et la complexité de construction d'un tel catamaran.

On prévoira avantageusement une rigidité de torsion suffisante pour que ledit catamaran puisse effectuer sans risque, les transferts au port de l'embase seule, depuis la position 4a en extrémité de ponton, vers le tabouret 102, étant entendu que cette manutention est effectuée en zone portuaire, donc protégée, et de préférence par temps calme.

Ledit catamaran possède de préférence un système de propulsion associé à un positionnement dynamique de manière à être autonome et à pouvoir manoeuvrer avec précision tant au port que sur site lors de la dépose de l'ensemble. Une passerelle de commandement 112d est alors avantageusement située sur une cheminée 112c solidaire du flotteur transversal de liaison 111c en position centrale de celui-ci.

Dans le mode de réalisation de la figure 5C, une fois que l'éolienne a été déposée avec le fond 4-5 de l'embase reposant sur l'empierrement 20 au fond de la mer, on dégage le catamaran de la manière suivante. Les fonds 104 des flotteurs latéraux et transversaux arrivent à une profondeur légèrement inférieure à la profondeur du fond 4-5 de l'embase 4 et de l'empierrement 20, de sorte qu'il est possible de ballaster davantage lesdits flotteurs de manière à pouvoir rabaisser le catamaran et le dégager des oreilles latérales 4-3 contre lesquelles il venait en appui et de déplacer le catamaran ainsi dégagé après rétractation des différents vérins verticaux 121 et horizontaux 120 par déplacement dans la direction longitudinale XX' le long des parois latérales externes 117 de l'embase 4.

Pour simplifier le dégagement du catamaran après dépose de l'embase 4 sur l'empierrement 20 dans une version préférée de l'invention représentée sur la figure 7, lesdits deuxièmes éléments de structure renforcée inférieurs des flotteurs latéraux consistent en des butées articulées 118, qui sont articulées en rotation autour de leur base au niveau d'un redan 116 des bordés internes 114 des flotteurs latéraux, la rotation des dites butées 118 se faisant grâce à des seconds vérins horizontaux 119, qui après extension de leur tige 119a, viennent caler l'extrémité supérieure des butées articulées 118 en appui contre les sous-faces des oreilles ou extensions latérales 4-3 des bords supérieurs des parois latérales externes 117 de la structure inférieure parallélépipédique 4-1 de l'embase 4.

Ce mode de réalisation présente l'avantage de pouvoir après réalisation de la dépose de l'éolienne au fond de la mer, ballaster les flotteurs de manière à ce que le fond 106 de ceux-ci à une hauteur de H'₂ puisse se dégager à une profondeur supérieure à H'₂ et inférieure à H₂, afin de pouvoir relâcher lesdits seconds vérins 119 et rétracter la butée articulée 118, comme représenté à gauche de la figure 7. Ainsi, il est possible de dégager le catamaran par simple déballastage des flotteurs et remontée verticale en surface, sans avoir à le déplacer latéralement dans la direction longitudinale XX' pour le dégager de l'embase 4. La sous-face 4-3a des oreilles latérales 4-3 est de préférence inclinée de manière à permettre le dégagement de la butée articulée 118 par rotation depuis les parois externes latérales 117 de la structure inférieure 4-1 de l'embase 4 vers les flotteurs latéraux 111a-111b du catamaran. De même, les platines renforcées supérieures 115a-115b présentent une surface supérieure 115c de préférence inclinée d'une même inclinaison que les sous-faces 4-3a des oreilles latérales 4-3, de manière à venir épouser celles-ci sur toute leur surface lorsque lesdits premiers éléments de renfort supérieurs 115a-115b viennent en appui en sous-face des dites oreilles latérales 4-3, en position de préhension correspondant à un dit niveau supérieur de préhension, comme explicité précédemment en phase initiale de manutention dans le port.

Ce mode de réalisation de butée articulée, définie en référence à la figure 7, peut être réalisé par d'autres moyens, tels des butées à translation horizontales, par exemple une grande quantité de vérins 119, dont les tiges viennent alors en contact avec les oreilles latérales, soit directement soit par l'intermédiaire de butées coulissant horizontalement et travaillant de ce fait en flexion et en cisaillement, mais la version préférée reste la butée articulée, car cette dernière travaille en compression simple au niveau de ladite butée et en cisaillement simple au niveau de son articulation sur la structure du catamaran.

Dans une version préférée représentée sur la figure 1A, on a installé deux tabourets 102a et 102b, de manière à ce que lorsque la grue 103 finalise l'assemblage d'une l'éolienne sur le tabouret 102a, au retour du catamaran en provenance du site d'installation de l'éolienne précédente, le catamaran effectue d'abord le transfert d'une embase 4a disponible sur le ponton 101, vers ledit tabouret libre 102b pendant que la grue 103 assemble le pylône 3 et son moteur à vent 2 sur l'embase 4 du tabouret 102a. Puis, le catamaran prend en charge l'éolienne complètement terminée sur le tabouret 102a pour la transporter et l'installer sur site. Ainsi, la grue 103 peut commencer immédiatement l'assemblage d'une nouvelle éolienne sur le tabouret 102b, pendant que le catamaran effectue le transport et l'installation sur site de ladite éolienne terminée.

A titre illustratif, l'éolienne selon l'invention comprend un pylône d'une hauteur de 50 à 150 m, de préférence au moins 100 m de hauteur, dont la paroi tubulaire présente un diamètre de plus de 2 à 10 m, plus particulièrement de 6 à 7 m. L'embase comporte une structure parallélépipédique inférieure 4-1 à section carrée d'au moins 20 m, de préférence d'au moins 30 m de côté et 10 m de hauteur cloisonnée par des cloisons de 20 à 30 cm d'épaisseur en béton, formée des caissons 4-2 séparés par des cloisons verticales. La longueur L₁ des flotteurs latéraux dans la direction longitudinale XX' d'une part, et d'autre part, la distance entre les flotteurs latéraux dans la direction transversale YY' ou largeur L₂ de l'espace ouvert 105 du U sont légèrement supérieurs aux dimensions des côtés de ladite embase correspondante, qui lui sont en vis-à-vis, de manière à ce que ladite embase puisse venir s'insérer entre lesdits flotteurs latéraux. La cavité tubulaire 4-4 s'élève à une hauteur H au-dessus de la face supérieure 4-8 de la structure parallélépipédique 4-1 de l'embase 4, sensiblement en son centre d'une hauteur H de 15 à 25 m, la hauteur h de l'embase étant de 5 à 15 m. La hauteur h₃ des cheminées 112a-112b-112c est de 15 à 35 m et la hauteur h₄ des flotteurs 111a, 111b, 111c est de 5 à 10 m, de sorte qu'il est possible de déposer l'embase à une profondeur H₂ jusqu'à 50 m.

Sur les figures 3C et 5A, le catamaran est verrouillé sur ladite embase reposant sur le tabouret 102 respectivement au dit niveau supérieur de préhension (Fig. 3C) et niveau inférieur de préhension (Fig. 5A). La différence des tirants d'eaux H'₁ - H"₀ des figures 5A et 3C correspond à la différence de hauteur entre lesdits niveau supérieur de préhension et niveau inférieur de préhension, à savoir en pratique de 5 à 10 m, pour des flotteurs de hauteur h4 de 5 à 15 m.

Sur la figure 7, la différence de niveau H'₂ - H₂ entre le fond 4-5 de l'embase et le fond 106 des flotteurs latéraux dans les conditions de préhension de ladite embase à un dit niveau inférieur de préhension est de 2 m, de préférence moins de 1 m.

A titre d'exemple, l'éolienne offshore est constituée d'un moteur générateur de 100 T et d'un pylône d'environ 3 m de diamètre et de longueur L d'environ 90 m, pesant environ 150 T.

La stabilité d'un navire est caractérisée, de manière connue de l'homme de l'art dans le domaine de l'architecture navale, par la « hauteur métacentrique » GM, c'est-à-dire la distance entre le centre de gravité de la structure et le métacentre, c'est-à-dire sensiblement le point autour duquel pivote le navire lorsqu'il prend de la gite. Un navire conventionnel doit avoir un GMt (transversal) supérieur à 0.5-1m pour assurer une bonne stabilité en toutes circonstances. Le catamaran selon l'invention étant de forme sensiblement carrée présente ainsi des hauteurs métacentriques transversale (GMt) et longitudinale (GMI) sensiblement similaires.

Ainsi, pour un catamaran de 72m de largeur totale, de 75m de longueur totale, de 10 m de hauteur h₄ de coque principale, comportant trois cheminées de section 15m x 15m et de hauteur h₃ 25m, présentant une ouverture en forme de U de 32m x 32m capable de saisir et transporter une éolienne constituée d'une embase de 30m x 30m, de 10m de hauteur et de poids à vide 6000 tonnes, surmontée par un pylône de 125 m de hauteur et pesant 300 tonnes, surmonté d'une nacelle munie d'un rotor à trois pales de 250 tonnes, les valeurs de GM pour les différentes phases de manutention et de transport sont respectivement sensiblement :
- figure 3B transfert de l'embase seule depuis le ponton vers le tabouret : pour un tirant d'eau minimal H₀ de 0.75 à 1.5m GM = 60-80m
- figure 5B transport sur site de l'éolienne complète : pour un tirant d'eau intermédiaire H₁ de 4 à 7m, GM = 40-45m
- figure 5C, dépose de l'éolienne complète sur sa fondation empierrée 20 : pour un tirant d'eau maximal H₂ de 25 à 30m, GM = 18-22m
- retour au port du catamaran à vide : pour un tirant d'eau intermédiaire H₁ de 4 à 7m, GM = 145-160m

Il apparaît ainsi que, malgré la hauteur considérable du centre de gravité de l'éolienne dû à la hauteur du pylône associé à sa nacelle, la hauteur métacentrique reste largement au dessus des normes de sécurité habituelles des navires, en l'espèce supérieur à 15 m, ce qui facilite d'autant les opérations d'installation des éoliennes en mer grâce aux dispositifs d'installation selon l'invention.

Un catamaran selon l'invention, construit pour saisir et manutentionner des embases de dimension données, pourra aussi installer des éoliennes dont les embases sont plus petites, dans la mesure où l'on installe avantageusement des structure, de préférence des structures mécano-soudées solidaires desdites premières structures renforcées supérieures 115a-115b, ou desdits redans 116a-116b, venant ainsi combler l'espace entre lesdits supports et lesdites oreilles latérales renforcées 4-3 de l'embase.

## Revendications

1. Bateau de type catamaran (110) utile pour l'assemblage, le transport et la dépose au fond de la mer (20) d'éoliennes maritimes (1), comprenant au moins :
- une embase (4) destinée à reposer ou à être ancrée au fond de la mer,
- un pylône (3) pouvant être supporté par ladite embase, de préférence l'extrémité inférieure étant encastrée dans ladite embase (4), et
- un moteur à vent (2) pouvant équiper ledit pylône (3) à son sommet,
- ledit bateau comprenant deux flotteurs latéraux (111a-111b) dont les axes longitudinaux dans la direction longitudinale (XX') sont disposés parallèlement, lesdits flotteurs latéraux (111a-111b) étant réunis entre eux par une structure transversale de liaison (111c), de préférence un flotteur transversal avant s'étendant dans une direction (YY') perpendiculaire à ladite direction longitudinale (XX'), réunissant entre eux à une de leurs extrémités (108) les deux flotteurs latéraux de manière à constituer une structure flottante en forme de U, et
- l'espace ouvert (105) entre les deux branches du U constituées par les deux flotteurs latéraux, étant apte à recevoir une dite embase, de préférence d'au moins 20 m de large, lesdits flotteurs étant équipés de moyens de préhension (115a-115b,120-121,116a-116b,118-119) aptes à réaliser la préhension de ladite embase (4) entre les deux dits flotteurs latéraux, lesdits flotteurs latéraux comprenant des compartiments étanches aptes à être ballastés et déballastés, de préférence avec de l'eau de mer,
**caractérisé en ce que** lesdits moyens de préhension sont aptes à réaliser une préhension de ladite embase à au moins deux niveaux de préhension différents suivants :
- un niveau supérieur de préhension dans lequel il est possible de réaliser la préhension de ladite embase lorsque le fond (4-5) de ladite embase est au-dessus du fond (106) des dits flotteurs latéraux, de préférence le fond (4-5) de l'embase étant au dessus du niveau de l'eau (30), et que lesdits deux flotteurs latéraux sont au moins partiellement déballastés, et
- un niveau inférieur de préhension et de verrouillage dans lequel le fond (4-5) de l'embase est situé au-dessous du fond (106) des dits flotteurs latéraux, lesdits moyens de préhension de l'embase au dit niveau inférieur comprenant des moyens de verrouillage de l'embase aptes à réaliser une liaison rigide entre lesdits flotteurs latéraux et ladite embase.

2. Bateau de type catamaran selon la revendication 1, **caractérisé en ce que** lesdits moyens de verrouillage comprennent :
- des moyens de serrage verticaux (121), coopérant avec ladite embase et chacun des deux flotteurs latéraux, aptes à bloquer tout mouvement vertical relatif de l'embase par rapport à chacun desdits flotteurs latéraux, et
- des moyens de serrage horizontaux (120), coopérant avec ladite embase et chacun des deux flotteurs latéraux, aptes à bloquer tout mouvement horizontal relatif de l'embase par rapport à chacun desdits flotteurs latéraux.

3. Bateau de type catamaran selon l'une des revendications 1 ou 2, **caractérisé en ce que** :
- lesdits moyens de préhension au dit niveau supérieur de préhension comprennent des éléments de structure renforcée supérieurs (4-3) de ladite embase, aptes à venir en appui et être supportés par des éléments de structure renforcée supérieurs (115a-115b) de chacun des deux flotteurs latéraux, lorsque lesdits deux flotteurs latéraux sont au moins partiellement déballastés, le fond (4-5) de ladite embase étant situé au-dessus du fond (106) de chacun des deux flotteurs latéraux, et
- lesdits moyens de préhension et verrouillage au dit niveau inférieur de préhension comprennent :
. des moyens supérieurs de serrage verticaux (121), aptes à plaquer en force verticalement des éléments de structure renforcée supérieurs de ladite embase contre des éléments de structure renforcée inférieurs de chacun desdits flotteurs latéraux, et
. des moyens inférieurs de serrage horizontaux (120), aptes à exercer des poussées horizontales en sens inverse entre chacune des deux parois latérales externes opposées (117) de ladite embase et, respectivement, chacun des deux bordés internes (114) de chacun desdits flotteurs latéraux en vis-à-vis, empêchant ainsi tout mouvement relatif horizontal de ladite embase par rapport aux dits flotteurs latéraux.

4. Bateau de type catamaran selon l'une des revendications 2 ou 3, **caractérisé en ce que** :
a) lesdits moyens de préhension comprennent :
- des premiers éléments de structure renforcée supérieurs (115a,115b), de préférence en forme de platines s'étendant dans la direction longitudinale (XX') des dits flotteurs latéraux le long des bords supérieurs des bordés internes (114) des dits flotteurs latéraux dont ils sont solidaires, de préférence encore dépassant vers ledit espace ouvert (105) du U, et
- des deuxièmes éléments de structure inférieurs (116a,116b,118-119) solidaires des dits bordés internes (114) des flotteurs latéraux et situés en dessous des dits premiers éléments de structure renforcée supérieurs (115a-115b), et
- des troisièmes éléments de structure renforcée (4-3) solidaires de ladite embase, s'étendant le long des bords supérieurs opposés des parois latérales externes (117a-117b) de ladite embase, de préférence des bords supérieurs des parois externes opposées et parallèles (117) d'une dite embase parallélépipédique, dépassant vers l'extérieur de celles-ci, de telle sorte que :
. lesdits premiers éléments de structure renforcée supérieurs (115a-115b) des dits flotteurs latéraux sont aptes à supporter lesdits troisièmes éléments de structure renforcée supérieurs de ladite embase pour réaliser une préhension à un dit niveau supérieur de préhension, lorsque ladite embase est insérée entre les deux dits flotteurs latéraux et que les deux dits flotteurs latéraux sont partiellement déballastés pour exercer une poussée vers le haut des dits premiers éléments de structure renforcée supérieurs (115a-115b) des flotteurs latéraux contre lesdits troisièmes éléments de structure renforcée supérieurs (4-3) de ladite embase, et
. lesdits deuxièmes éléments de structure renforcée inférieurs des dits flotteurs latéraux (116a-116b) sont aptes à supporter des dits troisièmes éléments de structure renforcée supérieurs de ladite embase (4-3) pour réaliser une préhension à un dit niveau inférieur de préhension lorsque ladite embase est insérée entre les deux flotteurs latéraux et que lesdits flotteurs latéraux sont partiellement déballastés pour exercer une poussée vers le haut des dits deuxièmes éléments de structure renforcée inférieurs des flotteurs latéraux contre lesdits troisièmes éléments de structure renforcée supérieurs de ladite embase,
b) lesdits moyens de verrouillage des moyens de préhension à un niveau inférieur de préhension comprennent :
- des moyens supérieurs de serrage verticaux (121) dont une partie au moins est solidaire des dits premiers éléments de structure renforcée supérieurs (115a-115b), lesdits moyens supérieurs de serrage verticaux étant aptes à plaquer en force lesdits troisièmes éléments de structure renforcée supérieurs de l'embase (4-3) contre lesdits deuxièmes éléments de structure renforcée des flotteurs latéraux, de préférence en forme de redans (116a-116b), et
- des moyens inférieurs de serrage horizontaux (120) dont une partie au moins est solidaire des bordés internes (114) des dits flotteurs latéraux au-dessous des dits deuxièmes éléments de structure renforcée inférieures des flotteurs, de préférence en forme de redans (116a,116b),lesdits moyens inférieurs de serrage (120) étant aptes à exercer une poussée sur lesdites parois latérales externes opposées (117) de ladite embase.

5. Bateau de type catamaran selon la revendication 4, **caractérisé en ce que** :
- lesdits moyens de serrage verticaux comprennent des vérins supérieurs de serrage verticaux (121) dont le corps de vérin est solidaire des dits premiers éléments de structure renforcée supérieurs (115a-115b) et dont l'extrémité de la tige (121a) des vérins est apte à plaquer en force lesdits troisièmes éléments de structure renforcée supérieurs de l'embase (4-3) contre lesdits deuxièmes éléments de structure renforcée des flotteurs latéraux en forme de redans (116a-116b), et
- lesdits moyens inférieurs de serrage horizontaux comprennent des vérins inférieurs de serrage horizontaux (120) dont le corps de vérin est solidaire des bordés internes (114) des dits flotteurs latéraux au-dessous des dits deuxièmes éléments de structure renforcée inférieurs des flotteurs en forme de redans (116a-116b) et dont les tiges (120a) de vérins s'étendent en extension en sens opposés de manière à exercer une poussée sur lesdites parois latérales externes opposées (117) de ladite embase.

6. Bateau de type catamaran selon l'une des revendications 4 ou 5, **caractérisé en ce que** lesdits deuxièmes éléments de structure inférieure (116a-116b) comportent des redans (116a-116b) dans les bordés internes (114) des flotteurs latéraux, redans à l'intérieur desquels des butées articulées en rotation (118) sont aptes à être articulés en rotation autour de leur base (118a) logée dans lesdits redans à l'aide de seconds vérins horizontaux (119), aptes à pousser l'extrémité supérieure (118b) des dites butées contre la sous-face (4-3a) des dits troisièmes éléments de structure renforcée supérieurs en forme d'oreilles latérales (4-3) de ladite embase.

7. Bateau de type catamaran selon l'une des revendications 1 à 6, **caractérisé en ce que** lesdits flotteurs latéraux (111a,111b,111c) sont surmontés par des structures supérieures de flottaison dénommées cheminées (112a,112b,112c) de section horizontale inférieure à la section des dits flotteurs latéraux au-dessus desquels ils s'élèvent sur une hauteur (h₃) telle que lorsque lesdits flotteurs latéraux sont en position totalement immergée de ballastage maximal, l'extrémité supérieure (113) des dites cheminées dépasse au-dessus du niveau de l'eau (30).

8. Bateau de type catamaran selon la revendication 7, **caractérisé en ce qu'**il comporte au moins trois cheminées (112a,112b,112c), dont une cheminée sensiblement dans l'axe dudit bateau au milieu dudit flotteur transversal (111c) et deux cheminées (112a,112b) à l'extrémité arrière libre (104) de chacun des deux flotteurs latéraux (111a,111b).

9. Bateau de type catamaran selon la revendication 7 ou 8, **caractérisé en ce que** la hauteur cumulée (h₃+h₄) des dits flotteurs latéraux (h₄) et dites cheminées (h3) est telle que ledit catamaran peut adopter :
- un tirant d'eau minimal (H0) dans lequel lesdits moyens de préhension supérieurs (115a-115b) et/ou la surface supérieure (111-1) des dits flotteurs latéraux sont à une hauteur d'au moins 5 m, de préférence au moins 10 m au-dessus du niveau de l'eau (30), et
- un tirant d'eau maximal (H2) d'au moins 25 m, de préférence au moins 50 m, dans lequel lesdits flotteurs latéraux sont totalement immergés et l'extrémité supérieure (113) des dites cheminées reste émergée.

10. Bateau de type catamaran selon l'une des revendications 7 à 9, **caractérisé en ce que** :
- la hauteur (h4) des dits flotteurs latéraux est d'au moins 5 m, de préférence de 5 à 15 m, et
- la hauteur (h3) des dites cheminées est d'au moins 15 m, de préférence de 15 à 35 m.

11. Procédé de manutention et d'assemblage dans un port et/ou transport en mer et dépose au fond de la mer d'une éolienne maritime, comprenant au moins :
- une embase (4) destinée à reposer ou à être ancrée au fond de la mer,
- un pylône (3) pouvant être supporté par ladite embase, de préférence son extrémité inférieure étant encastrée dans ladite embase (4), et
- un moteur à vent (2) pouvant équiper ledit pylône (3) à son sommet,
à l'aide d'un bateau de type catamaran selon l'une des revendications 1 à 9, **caractérisé en ce que** l'on réalise les étapes initiales successives dans lesquelles :
1) on réalise la préhension de ladite embase seule à l'aide d'un dit bateau de type catamaran, dont lesdits moyens de préhension réalisent la préhension de ladite embase à un dit niveau supérieur de préhension, le fond (4-5) de ladite embase étant situé au-dessus du niveau de l'eau (30), de préférence sur un ponton (101) d'un quai (100) du port, et
2) de préférence, on soulève ladite embase par rapport au dit ponton en déballastant davantage lesdits flotteurs (111a-111c), et
3) on déplace ladite embase en déplaçant ledit bateau dans le port, et
4) on dépose ladite embase sur une structure support dénommée « tabouret » (102) reposant au fond du port en ballastant lesdits flotteurs (111a,111b,111c), et
5) on dégage ledit catamaran par rapport à ladite embase, et
6) on réalise l'assemblage d'un dit pylône (3) sur ladite embase (4), de préférence par encastrement de son extrémité inférieure sur ladite embase et on fixe ledit moteur à vent (2) au sommet dudit pylône à l'aide d'une dite grue (103), et
7) on réalise la préhension de ladite embase équipée de ladite éolienne, à un dit niveau inférieur de préhension, le fond (4-5) de ladite embase étant immergé,
8) puis, on transporte en mer ladite embase équipée de ladite éolienne, avec ledit catamaran, et
9) on ballaste lesdits flotteurs de manière à les immerger totalement et on dépose ladite embase sur son site d'implantation (60) au fond de la mer, et
10) on dégage ledit catamaran par rapport à ladite embase en déverrouillant lesdits moyens de verrouillage, puis en déplaçant ledit catamaran et en le remontant, en diminuant son tirant d'eau par déballastage au moins partiel de ses dits flotteurs (111a-111c).

12. Procédé selon la revendication 11, **caractérisé en ce que** l'on transporte une dite éolienne assemblée depuis son site d'assemblage dans le port jusqu'à un site d'implantation en mer à l'aide d'un dit bateau du type catamaran, en réalisant les étapes suivantes successives dans lesquelles :
1) on saisit ladite éolienne au niveau de sa dite embase reposant sur un dit tabouret (102) à l'aide des dits moyens de préhension à un dit niveau inférieur de préhension, et on réalise le verrouillage des dits moyens de préhension de manière à ce que la liaison entre ladite embase (4) et lesdits flotteurs latéraux (111a,111b) soit une liaison rigide, et
2) de préférence, on soulève ladite éolienne de manière à ce que le fond (4-5) de sa dite embase (4) se dégage dudit tabouret en déballastant davantage lesdits flotteurs (111a,111b,111c), et
3) on déplace ladite éolienne dont l'embase est ainsi verrouillée jusqu'à son site d'implantation en mer, de préférence lesdits flotteurs étant ballastés avec un tirant d'eau intermédiaire (H1), et
4) on ballaste lesdits flotteurs de manière à les immerger totalement et on dépose ladite embase sur son site d'implantation (60) au fond de la mer, et
5) on dégage ledit catamaran par rapport à ladite embase en déverrouillant lesdits moyens de verrouillage, puis en déplaçant ledit catamaran et en le remontant, en diminuant son tirant d'eau par déballastage au moins partiel de ses dits flotteurs (111a-111c).

13. Procédé selon la revendication 12, **caractérisé en ce que** lesdits flotteurs (111a,111b,111c) comprennent des dites cheminées, celles-ci restant partiellement immergées lorsque l'on ballaste lesdits flotteurs latéraux pour descendre et reposer ladite embase au fond de la mer à une profondeur (H'₂) d'au moins 20 m, de préférence au moins 50 m.

14. Procédé selon l'une des revendications 11 à 13, **caractérisé en ce que** l'on installe deux dits tabourets (102a-102b) au fond du port, de manière à ce que la grue (103) puisse réaliser l'assemblage d'une éolienne (1) sur un premier tabouret (102a) pendant que ledit bateau catamaran (110) transporte une éolienne préalablement assemblée depuis un deuxième tabouret (102b) sur lequel elle a été assemblée jusqu'à son site d'implantation, puis revient pour déposer une nouvelle embase sur ledit deuxième tabouret, et ladite grue pouvant alors réaliser l'assemblage d'une nouvelle éolienne sur ledit deuxième tabouret pendant que le même bateau de type catamaran réalise le transport puis la dépose de l'éolienne assemblée depuis le premier tabouret vers son site d'implantation, puis la manutention et la dépose d'une nouvelle embase sur ledit premier tabouret, et ainsi de suite.

## Patentansprüche

1. Schiff vom Typ Katamaran (110) für die Montage, den Transport und das Absetzen auf dem Meeresgrund (20) von Offshore-Windkraftanlagen (1), wenigstens umfassend:
- einen Sockel (4), der dazu bestimmt ist, auf dem Meeresgrund aufzuliegen oder an diesem verankert zu werden,
- einen Mast (3), der durch den Sockel getragen werden kann, wobei vorzugsweise das untere Ende in den Sockel (4) eingelassen ist, und
- einen Windmotor (2), mit dem der Mast (3) an seiner Spitze ausgestattet werden kann,
- wobei das Schiff zwei seitliche Schwimmkörper (111 a-111b) umfasst, deren Längsachsen in der Längsrichtung (XX') parallel angeordnet sind, wobei die seitlichen Schwimmkörper (111a-111b) durch eine Verbindungsquerstruktur (111 c) untereinander verbunden sind, wobei vorzugsweise ein vorderer Querschwimmkörper, der in einer Richtung (YY') senkrecht zu der Längsrichtung (XX') verläuft, die beiden seitlichen Schwimmkörper an einem ihrer Enden (108) untereinander verbindet, so dass eine schwimmende U-förmige Struktur gebildet wird, und
- wobei der offene Raum (105) zwischen den beiden Schenkeln des U, welche durch die beiden seitlichen Schwimmkörper gebildet sind, geeignet ist, einen Sockel, vorzugsweise mit einer Breite von wenigstens 20 m, aufzunehmen, wobei die Schwimmkörper mit Greifmitteln (115a-115b, 120-121, 116a-116b, 118-119) ausgestattet sind, die geeignet sind, das Greifen des Sockels (4) zwischen den beiden seitlichen Schwimmkörpern zu vollziehen, wobei die seitlichen Schwimmkörper dichte Kammern umfassen, die geeignet sind, mit Ballast versehen und von Ballast befreit zu werden, vorzugsweise mit Meerwasser,
**dadurch gekennzeichnet, dass** die Greifmittel geeignet sind, ein Greifen des Sockels in wenigstens folgenden zwei unterschiedlichen Greifhöhen zu vollziehen:
- einer oberen Greifhöhe, in der es möglich ist, das Greifen das Sockels zu vollziehen, wenn der Boden (4-5) des Sockels sich oberhalb des Bodens (106) der seitlichen Schwimmkörper befindet, wobei vorzugsweise der Boden (4-5) des Sockels sich oberhalb des Wasserspiegels (30) befindet, und wenn die beiden seitlichen Schwimmkörper wenigstens teilweise von Ballast befreit sind, und
- einer unteren Greif- und Verriegelungshöhe, in der der Boden (4-5) des Sockels sich unterhalb des Bodens (106) der seitlichen Schwimmkörper befindet, wobei die Mittel zum Greifen des Sockels in der unteren Höhe Mittel zum Verriegeln des Sockels umfassen, die geeignet sind, eine starre Verbindung zwischen den seitlichen Schwimmkörpern und dem Sockel herzustellen.

2. Schiff vom Typ Katamaran nach Anspruch 1, **dadurch gekennzeichnet, dass** die Verriegelungsmittel umfassen:
- vertikale Klemmmittel (121), die mit dem Sockel und jedem der beiden seitlichen Schwimmkörper zusammenwirken, die geeignet sind, jede vertikale Relativbewegung des Sockels gegenüber einem jeden der seitlichen Schwimmkörper zu blockieren, und
- horizontale Klemmmittel (120), die mit dem Sockel und jedem der beiden seitlichen Schwimmkörper zusammenwirken, die geeignet sind, jede horizontale Relativbewegung des Sockels gegenüber einem jeden der seitlichen Schwimmkörper zu blockieren.

3. Schiff vom Typ Katamaran nach einem der Ansprüche 1 oder 2, **dadurch gekennzeichnet, dass**:
- die Mittel zum Greifen in der oberen Greifhöhe obere Elemente mit verstärkter Struktur (4-3) des Sockels umfassen, die geeignet sind, in Anlage zu gelangen und durch obere Elemente mit verstärkter Struktur (115a-115b) eines jeden der beiden seitlichen Schwimmkörper getragen zu werden, wenn die beiden seitlichen Schwimmkörper wenigstens teilweise von Ballast befreit sind, wobei der Boden (4-5) des Sockels oberhalb des Bodens (106) eines jeden der beiden seitlichen Schwimmkörper gelegen ist, und
- die Mittel zum Greifen und Verriegeln in der unteren Greifhöhe umfassen:
- obere vertikale Klemmmittel (121), die geeignet sind, obere Elemente mit verstärkter Struktur des Sockels mit Kraft vertikal gegen untere Elemente mit verstärkter Struktur eines jeden der seitlichen Schwimmkörper zu drücken, und
- untere horizontale Klemmmittel (120), die geeignet sind, horizontale Schubkräfte in Gegenrichtung zwischen jeder der beiden gegenüberliegenden äußeren Seitenwände (117) des Sockels bzw. jeder der beiden inneren Außenhäute (114) eines jeden der gegenüberliegenden seitlichen Schwimmkörper auszuüben, wodurch jede horizontale Relativbewegung des Sockels gegenüber den seitlichen Schwimmkörpern verhindert wird.

4. Schiff vom Typ Katamaran nach einem der Ansprüche 2 oder 3, **dadurch gekennzeichnet, dass**:
a) die Greifmittel umfassen:
- erste obere Elemente mit verstärkter Struktur (115a, 115b), vorzugsweise in Form von Platten, die in Längsrichtung (XX') der seitlichen Schwimmkörper entlang der oberen Ränder der inneren Außenhäute (114) der seitlichen Schwimmkörper, mit denen sie fest verbunden sind, verlaufen, weiterhin vorzugsweise in Richtung des offenen Raums (105) des U hinausragen, und
- zweite untere Strukturelemente (116a, 116b, 118-119), die mit den inneren Außenhäuten (114) der seitlichen Schwimmkörper fest verbunden sind und unterhalb der ersten oberen Elemente mit verstärkter Struktur (115a-115b) gelegen sind, sowie
- dritte Elemente mit verstärkter Struktur (4-3), die mit dem Sockel fest verbunden sind, die sich entlang der gegenüberliegenden oberen Ränder der äußeren Seitenwände (117a-117b) des Sockels, vorzugsweise der oberen Ränder der gegenüberliegenden und parallelen Außenwände (117) eines quaderförmigen Sockels erstrecken, zu deren Außenseite hin hinausragen, derart, dass:
- die ersten oberen Elemente mit verstärkter Struktur (115a-115b) der seitlichen Schwimmkörper geeignet sind, die dritten oberen Elemente mit verstärkter Struktur des Sockels zu tragen, um ein Greifen in einer oberen Greifhöhe zu vollziehen, wenn der Sockel zwischen den beiden seitlichen Schwimmkörpern eingefügt ist und die beiden seitlichen Schwimmkörper teilweise von Ballast befreit sind, um eine Schubkraft zur Oberseite der ersten oberen Elemente mit verstärkter Struktur (115a-115b) der seitlichen Schwimmkörper gegen die dritten oberen Elemente mit verstärkter Struktur (4-3) des Sockels auszuüben, und
- die zweiten unteren Elemente mit verstärkter Struktur der seitlichen Schwimmkörper (116a-116b) geeignet sind, dritte obere Elemente mit verstärkter Struktur des Sockels (4-3) zu tragen, um ein Greifen in einer unteren Greifhöhe zu vollziehen, wenn der Sockel zwischen den beiden seitlichen Schwimmkörpern eingefügt ist und die seitlichen Schwimmkörper teilweise von Ballast befreit sind, um eine Schubkraft zur Oberseite der zweiten unteren Elemente mit verstärkter Struktur der seitlichen Schwimmkörper gegen die dritten oberen Elemente mit verstärkter Struktur des Sockels auszuüben,
b) die Verriegelungsmittel der Mittel zum Greifen in einer unteren Greifhöhe umfassen:
- obere vertikale Klemmmittel (121), von denen wenigstens ein Teil mit den ersten oberen Elementen mit verstärkter Struktur (115a-115b) fest verbunden ist, wobei die oberen vertikalen Klemmmittel geeignet sind, die dritten oberen Elemente mit verstärkter Struktur des Sockels (4-3) mit Kraft gegen die zweiten Elemente mit verstärkter Struktur der seitlichen Schwimmkörper, vorzugsweise in Form von Stufen (116a-116b), zu drücken, und
- untere horizontale Klemmmittel (120), von denen wenigstens ein Teil mit den inneren Außenhäuten (114) der seitlichen Schwimmkörper unterhalb der zweiten unteren Elemente mit verstärkter Struktur der Schwimmkörper, vorzugsweise in Form von Stufen (116a, 116b), fest verbunden ist, wobei die unteren Klemmmittel (120) geeignet sind, eine Schubkraft auf die gegenüberliegenden äußeren Seitenwände (117) des Sockels auszuüben.

5. Schiff vom Typ Katamaran nach Anspruch 4, **dadurch gekennzeichnet, dass**:
- die vertikalen Klemmmittel obere vertikale Klemmzylinder (121) umfassen, deren Zylinderkörper mit den ersten oberen Elementen mit verstärkter Struktur (115a-115b) fest verbunden ist und von denen das Ende der Stange (121 a) der Zylinder geeignet ist, die dritten oberen Elemente mit verstärkter Struktur des Sockels (4-3) mit Kraft gegen die stufenförmigen zweiten Elemente mit verstärkter Struktur (116a-116b) der seitlichen Schwimmkörper zu drücken, und
- die unteren horizontalen Klemmmittel untere horizontale Klemmzylinder (120) umfassen, deren Zylinderkörper mit den inneren Außenhäuten (114) der seitlichen Schwimmkörper unterhalb der stufenförmigen zweiten unteren Elemente mit verstärkter Struktur (116a-116b) der Schwimmkörper fest verbunden ist und deren Zylinderstangen (120a) ausgestreckt in entgegengesetzter Richtung verlaufen, um eine Schubkraft auf die gegenüberliegenden äußeren Seitenwände (117) des Sockels auszuüben.

6. Schiff vom Typ Katamaran nach einem der Ansprüche 4 oder 5, **dadurch gekennzeichnet, dass** die zweiten unteren Strukturelemente (116a-116b) Stufen (116a-116b) in den inneren Außenhäuten (114) der seitlichen Schwimmkörper umfassen, Stufen, in denen drehgelenkig angebrachte Anschläge (118) um ihre in den Stufen gelagerte Basis (118a) mit Hilfe von zweiten horizontalen Zylindern (119), welche geeignet sind, das obere Ende (118b) der Anschläge gegen die Unterseite (4-3a) der dritten oberen Elemente mit verstärkter Struktur in Form von Seitenlappen (4-3) des Sockels zu drücken, drehverschwenkbar sind.

7. Schiff vom Typ Katamaran nach einem der Ansprüche 1 bis 6, **dadurch gekennzeichnet, dass** über den seitlichen Schwimmkörpern (111 a, 111 b, 111 c) als Schächte (112a, 112b, 112c) bezeichnete obere Schwimmstrukturen angeordnet sind, mit einem horizontalen Querschnitt, der kleiner als der Querschnitt der seitlichen Schwimmkörper ist, oberhalb derer sie sich über eine Höhe (h₃) erheben, die derart ist, dass wenn die seitlichen Schwimmkörper sich in vollkommen eingetauchter Position maximaler Ballastierung befinden, das obere Ende (113) der Schächte oberhalb des Wasserspiegels (30) hinausragt.

8. Schiff vom Typ Katamaran nach Anspruch 7, **dadurch gekennzeichnet, dass** es wenigstens drei Schächte (112a, 112b, 112c) umfasst, davon ein Schacht im Wesentlichen in der Achse des Schiffes in der Mitte des Querschwimmkörpers (111c) und zwei Schächte (112a, 112b) an dem hinteren freien Ende (104) eines jeden der beiden seitlichen Schwimmkörper (111 a, 111 b).

9. Schiff vom Typ Katamaran nach Anspruch 7 oder 8, **dadurch gekennzeichnet, dass** die kumulierte Höhe (h₃+h₄) der seitlichen Schwimmkörper (h₄) und Schächte (h₃) derart ist, dass der Katamaran annehmen kann:
- einen minimalen Tiefgang (H0), bei dem die oberen Greifmittel (115a-115b) und/oder die Oberfläche (111-1) der seitlichen Schwimmkörper sich in einer Höhe von wenigstens 5 m, vorzugsweise wenigstens 10 m oberhalb des Wasserspiegels (30) befinden, und
- einen maximalen Tiefgang (H2) von wenigstens 25 m, vorzugsweise wenigstens 50 m, bei dem die seitlichen Schwimmkörper vollständig eingetaucht sind und das obere Ende (113) der Schächte herausragend bleibt.

10. Schiff vom Typ Katamaran nach einem der Ansprüche 7 bis 9, **dadurch gekennzeichnet, dass**:
- die Höhe (h4) der seitlichen Schwimmkörper wenigstens 5 m, vorzugsweise 5 bis 15 m beträgt, und
- die Höhe (h3) der Schächte wenigstens 15 m, vorzugsweise 15 bis 35 m beträgt.

11. Verfahren zum Befördern und Montieren in einem Hafen und/oder Transportieren auf See und Absetzen auf dem Meeresgrund einer Offshore-Windkraftanlage, wenigstens umfassend:
- einen Sockel (4), der dazu bestimmt ist, auf dem Meeresgrund aufzuliegen oder an diesem verankert zu werden,
- einen Mast (3), der durch den Sockel getragen werden kann, wobei vorzugsweise sein unteres Ende in den Sockel (4) eingelassen ist, und
- einen Windmotor (2), mit dem der Mast (3) an seiner Spitze ausgestattet werden kann,
mit Hilfe eines Schiffes vom Typ Katamaran nach einem der Ansprüche 1 bis 9, **dadurch gekennzeichnet, dass** die aufeinanderfolgenden Anfangsschritte durchgeführt werden, bei denen:
1) das Greifen des Sockels lediglich mit Hilfe eines Schiffes vom Typ Katamaran vollzogen wird, dessen Greifmittel das Greifen des Sockels in einer oberen Greifhöhe, wobei der Boden (4-5) des Sockels oberhalb des Wasserspiegels (30) gelegen ist, vorzugsweise auf einem Ponton (101) eines Kais (100) des Hafens vollziehen, und
2) vorzugsweise der Sockel gegenüber dem Ponton dadurch angehoben wird, dass die Schwimmkörper (111a-111c) mehr von Ballast befreit werden, und
3) der Sockel durch Bewegen des Schiffes in dem Hafen bewegt wird, und
4) der Sockel auf einer als "Hocker" (102) bezeichneten Tragstruktur, die auf dem Grund des Hafens aufliegt, durch Ballastieren der Schwimmkörper (111 a, 111 b, 111 c) abgesetzt wird, und
5) der Katamaran von dem Sockel gelöst wird, und
6) das Montieren eines Mastes (3) auf dem Sockel (4), vorzugsweise durch Einbetten seines unteren Endes an dem Sockel, vollzogen wird und der Windmotor (2) an der Spitze des Mastes mit Hilfe eines Krans (103) fixiert wird, und
7) das Greifen des mit der Windkraftanlage ausgestatteten Sockels in einer unteren Greifhöhe vollzogen wird, wobei der Boden (4-5) des Sockels eingetaucht ist,
8) anschließend der mit der Windkraftanlage ausgestattete Sockel mit dem Katamaran auf See transportiert wird und
9) die Schwimmkörper mit Ballast versehen werden, um sie vollständig einzutauchen, und der Sockel an seinem Aufstellungsort (60) am Meeresgrund abgesetzt wird, und
10) der Katamaran von dem Sockel dadurch gelöst wird, dass die Verriegelungsmittel entriegelt werden, anschließend durch Bewegen des Katamarans und dessen Hochfahren, indem sein Tiefgang durch wenigstens teilweises Ballastablassen aus seinen Schwimmkörpern (111 a-111 c) verringert wird.

12. Verfahren nach Anspruch 11, **dadurch gekennzeichnet, dass** eine montierte Windkraftanlage mit Hilfe eines Schiffes von Typ Katamaran von ihrem Montageort im Hafen bis zu einem Aufstellungsort auf See unter Durchführung der folgenden aufeinanderfolgenden Schritte transportiert wird, bei denen:
1) die Windkraftanlage im Bereich ihres auf einem Hocker (102) ruhenden Sockels mit Hilfe der Greifmittel in einer unteren Greifhöhe erfasst wird und das Verriegeln der Greifmittel derart vollzogen wird, dass die Verbindung zwischen dem Sockel (4) und den seitlichen Schwimmkörpern (111 a, 111 b) eine starre Verbindung ist, und
2) vorzugsweise die Windkraftanlage angehoben wird, so dass der Boden (4-5) ihres Sockels (4) sich von dem Hocker dadurch löst, dass die Schwimmkörper (111 a, 111 b, 111 c) mehr von Ballast befreit werden, und
3) die Windkraftanlage, deren Sockel somit verriegelt ist, bis zu ihrem Aufstellungsort auf See bewegt wird, wobei vorzugsweise die Schwimmkörper mit einem Zwischentiefstand (H1) ballastiert werden, und
4) die Schwimmkörper mit Ballast versehen werden, um sie vollständig einzutauchen, und der Sockel an seinem Aufstellungsort (60) auf dem Meeresgrund abgesetzt wird, und
5) der Katamaran von dem Sockel dadurch gelöst wird, dass die Verriegelungsmittel entriegelt werden, anschließend durch Bewegen des Katamarans und dessen Hochfahren, indem sein Tiefgang durch wenigstens teilweises Ballastablassen aus seinen Schwimmkörpern (111 a-111 c) verringert wird.

13. Verfahren nach Anspruch 12, **dadurch gekennzeichnet, dass** die Schwimmkörper (111 a, 111 b, 111 c) Schächte umfassen, wobei diese teilweise eingetaucht bleiben, wenn die seitlichen Schwimmkörper mit Ballast versehen werden, um den Sockel herabzulassen und auf dem Meeresgrund in einer Tiefe (H'₂) von wenigstens 20 m, vorzugsweise wenigstens 50 m abzusetzen.

14. Verfahren nach einem der Ansprüche 11 bis 13, **dadurch gekennzeichnet, dass** zwei Hocker (102a-102b) auf dem Grund des Hafens aufgestellt werden, so dass der Kran (103) das Montieren einer Windkraftanlage (1) auf einem ersten Hocker (1 02a) vornehmen kann, während das Katamaran-Schiff (110) eine zuvor montierte Windkraftanlage von einem zweiten Hocker (1 02b), auf dem sie montiert worden ist, bis zu ihrem Aufstellungsort transportiert, anschließend zurückkehrt, um einen neuen Sockel auf dem zweiten Hocker abzusetzen, und wobei der Kran dann das Montieren einer neuen Windkraftanlage auf dem zweiten Hocker vollziehen kann, während das gleiche Schiff vom Typ Katamaran den Transport, anschließend das Absetzen der montierten Windkraftanlage von dem ersten Hocker zu ihrem Aufstellungsort, dann die Beförderung und das Absetzen eines neuen Sockels auf dem ersten Hocker vollzieht, und so weiter.

## Claims

1. A catamaran type boat (110) suitable for use in assembling off-shore wind turbines (1), in transporting them, and in placing them on the sea bottom (20), the wind turbine comprising at least:
• a base (4) for resting on or being anchored to the sea bottom;
• a pylon (3) suitable for being supported by said base, preferably having its bottom end fixed in said base (4); and
• a wind engine (2) suitable for being fitted to the top of said pylon (3);
• said boat comprising two side floats (111a-111b) having longitudinal axes arranged in parallel in the longitudinal direction XX', said side floats (111a-111b) being connected together by a transverse connection structure (111c), preferably a front transverse float extending in a direction YY' perpendicular to said longitudinal direction XX', and connecting together the two side floats at one of their ends (108) so as to constitute a U-shaped floating structure; and
• the open space (105) between the two branches of the U-shape constituted by the two side floats being suitable for receiving a said base, preferably having a width of at least 20 m, said floats being fitted with gripper means (115a-115b, 120-121, 116a-116b, 118-119) suitable for gripping said base (4) between said two side floats, said side floats including watertight compartments suitable for being ballasted and de-ballasted, preferably with sea water;
the boat being **characterized in that** said gripper means are suitable for gripping said base at at least the following two different grip levels:
• an upper grip level in which it is possible to grip said base when the bottom (4-5) of said base is above the bottoms (106) of said side floats, with the bottom (4-5) of the base preferably being above water level (30), and when said two side floats are at least partially de-ballasted; and
• a lower grip and lock level in which the bottom (4-5) of the base is situated below the bottoms (106) of said side floats, said gripper means of the base for said lower level including locking means for locking the base and suitable for making a rigid connection between said side floats and said base.

2. A catamaran-type boat according to claim 1, **characterized in that** said locking means comprise:
• vertical clamping means (121) co-operating with said base and each of the two side floats, suitable for blocking any vertical movement of the base relative to each of said side floats; and
• horizontal clamping means (120) co-operating with said base and each of the two side floats, suitable for blocking any horizontal movement of the base relative to each of said side floats.

3. A catamaran-type boat according to claim 1 or claim 2, **characterized in that**:
• said gripper means at said upper grip level comprise upper reinforced structural elements (4-3) of said base suitable for bearing against and being supported by upper reinforced structural elements (115a-115b) of each of the two side floats when said two side floats are at least partially de-ballasted, the bottom (4-5) of said base being situated above the bottoms (106) of each of the two side floats; and
• said gripper and locking means at said lower grip level comprise:
• vertical upper clamping means (121) suitable for vertically forcing upper reinforced structural elements of said base against lower reinforced structural elements of each of said side floats; and
• horizontal lower clamping means (120) suitable for exerting horizontal thrusts in opposite directions between each of two opposite outer side walls (117) of said base and respective ones of the two facing inner margins (114) of each of said two side floats, thereby preventing any horizontal movement of said base relative to said two side floats.

4. A catamaran-type boat according to claim 2 or claim 3, **characterized in that**:
a) said gripper means comprise:
• upper first reinforced structural elements (115a, 115b), preferably in the form of plates extending in the longitudinal direction XX' of said side floats along the top edges of the inner margins (114) of said side floats to which they are secured, more preferably projecting into said open space (105) of the U-shape; and
• lower second structural elements (116a, 116b, 118-119) secured to said inner margins (114) of the side floats and situated lower than said upper first reinforced structural elements (115a-115b); and
• third reinforced structural elements (4-3) secured to said base, extending along the opposite upper edges of the outer side walls (117a-117b) of said base, preferably the upper edges of the opposite and parallel outer walls (117) of a said rectangular base, projecting outwards therefrom, such that:
• said upper first reinforced structural elements (115a-115b) of said side floats are suitable for supporting said upper third reinforced structural elements of said base in order to grip at a said upper grip level, while said base is inserted between said two side floats and said two side floats are partially de-ballasted so as to exert upward thrust from said upper first reinforced structural elements (115a-115b) of the side floats against said upper third reinforced structural elements (4-3) of said base; and
• said lower second reinforced structural elements of said side floats (116a-116b) are suitable for supporting said upper third reinforced structural elements of said base (4-3) in order to grip at a said lower grip level when said base is inserted between the two side floats and said side floats are partially de-ballasted in order to exert upward thrust from said lower second reinforced structural elements of the side floats against said upper third reinforced structural elements of said base;
b) said locking means of the gripper means at a lower grip level comprise:
• vertical upper clamping means (121), at least some of which are secured to said upper first reinforced structural elements (115a-115b), said vertical upper clamping means being suitable for forcing said upper third reinforced structural elements of the base (4-3) against said second reinforced structural elements of the side floats, which elements are preferably in the form of steps (116a-116b); and
• horizontal lower clamping means (120), at least some of which are secured to the inner margins (114) of said side floats below said lower second reinforced structural elements of the floats, preferably in the form of steps (116a, 116b), said lower clamping means (120) being suitable for exerting thrust against said opposite outer side walls (117) of said base.

5. A catamaran-type boat according to claim 4, **characterized in that**:
• said vertical clamping means comprise vertical upper clamping actuators (121) having their cylinders secured to said upper first reinforced structural elements (115a-115b) and the ends of their rods (121a) suitable for forcing said upper third reinforced structural elements of the base (4-3) against said second reinforced structural elements of the side floats in the form of steps (116a-116b); and
• said horizontal lower clamping means comprise horizontal lower clamping actuators (120) having their cylinders secured to the inner margins (114) of said side floats below said lower second reinforced structural elements of the floats in the form of steps (116a-116b) and their rods (120a) extending in opposite directions so as to exert thrust against said opposite outer side walls (117) of said base.

6. A catamaran-type boat according to claim 4 or claim 5, **characterized in that** said lower second structural elements (116a-116b) comprise steps (116a-116b) in the inner margins (114) of the side floats, in which steps pivotally-hinged abutments (118) are suitable for being pivoted about their bases (118a) received in said steps by means of second horizontal actuators (119) suitable for thrusting the upper ends (118b) of said abutments against the under-faces (4-3a) of said upper third reinforced structural elements in the form of side lugs (4-3) of said base.

7. A catamaran-type boat according to any one of claims 1 to 6, **characterized in that** said side floats (111a, 111b, 111c) are surmounted by upper buoyancy structures referred to as "chimneys" (112a, 112b, 112c) and of horizontal section smaller than the section of said side floats above which they extend over a height (h₃) such that when said side floats are in a maximally-ballasted totally-submerged position, the top ends (113) of said chimneys project above the water level (30).

8. A catamaran-type boat according to claim 7, **characterized in that** it includes at least three chimneys (112a, 112b, 112c) including one chimney substantially on the axis of said boat in the middle of said transverse float (111c), and two chimneys (112a, 112b) at the free stern ends (104) of respective ones of the two side floats (111a, 111b).

9. A catamaran-type boat according to claim 7 or claim 8, **characterized in that** the total height (h₃+h₄) of said side floats h₄ and of said chimneys h₃ is such that said catamaran can adopt:
• a minimum draught H₀ in which said upper gripper means (115a-115b) and/or the top surfaces (111-1) of said side floats are at a height of at least 5 m, and preferably at least 10 m above the water level (30); and
• a maximum draught H₂ of at least 25 m, preferably at least 50 m, in which said side floats are totally submerged and the top ends (113) of said chimneys remain above the water.

10. A catamaran-type boat according to any one of claims 7 to 9, **characterized in that**:
• the height h₄ of said side floats is at least 5 m, preferably lying in the range 5 m to 15 m; and
• the height h₃ of said chimneys is at least 15 m, preferably lying in the range 15 m to 35 m.

11. A method of handling and assembling an off-shore wind turbine in a port and/or of transporting it at sea and placing it on the sea bottom, the wind turbine comprising at least:
• a base (4) for resting on or being anchored to the sea bottom;
• a pylon (3) suitable for being supported by said base, preferably having its bottom end fixed in said base (4); and
• a wind engine (2) suitable for being fitted to the top of said pylon (3);
the method making use of a catamaran-type boat according to any one of claims 1 to 9 and being **characterized in that** the following initial steps are performed in succession:
1) gripping said base on its own using a said catamaran-type boat, in which the gripper means grip said base at a said upper grip level, the bottom (4-5) of said base being situated above the water level (30), preferably on a pontoon (101) of a quay (100) of the port; and
2) preferably, lifting said base relative to said pontoon by additionally de-ballasting said floats (111a-111c); and
3) moving said base by moving said boat within the port; and
4) placing said base on a support structure referred to as a "stool" (102), resting on the bottom of the port, with this being done by ballasting said floats (111a, 111b, 111c); and
5) disengaging said catamaran from said base; and
6) assembling a said pylon (3) on said base (4), preferably by fixing its bottom end to said base and fastening said wind engine (2) to the top of said pylon by using a said crane (103); and
7) gripping said base fitted with said wind turbine at a said lower grip level, the bottom (4-5) of said base being underwater; then
8) using said catamaran to transport said base fitted with said wind turbine out to sea; and
9) ballasting said floats so as to cause them to be completely underwater and placing said base on its installation site (60) on the bottom of the sea; and
10) disengaging said catamaran from said base by unlocking said locking means, and then moving said catamaran and causing it to rise, reducing its draught, by de-ballasting its said floats (111a-111c) at least in part.

12. A method according to claim 11, **characterized in that** a said assembled wind turbine is transported from its assembly site in the port to a site for installation at sea using a said catamaran-type boat, by performing the following steps in succession:
1) taking hold of said wind turbine at its said base resting on a said stool (102) using said gripper means at a said lower grip level, and locking said gripper means in such a manner that the connection between said base (4) and said side floats (111a, 111b) is a rigid connection; and
2) preferably, raising said wind turbine so that the bottom (4-5) of its said base (4) is disengaged from said stool, with this being done by additional de-ballasting of said floats (111a, 111b, 111c); and
3) moving said wind turbine with its base locked in this way to the site for installation at sea, said floats preferably being ballasted with an intermediate draught (H₁); and
4) ballasting said floats so as to cause them to be totally underwater and placing said base on its installation site (60) on the sea bottom; and
5) disengaging said catamaran from said base by unlocking said locking means and then moving said catamaran and causing it to rise, reducing its draught, by de-ballasting its said floats (111a-111c), at least in part.

13. A method according to claim 12, **characterized in that** said floats (111a, 111b, 111c) include said chimneys, which chimneys remain partially underwater when said side floats are ballasted to lower and place said base on the sea bottom at a depth H'₂ of at least 20 m, and preferably of at least 50 m.

14. A method according to any one of claims 11 to 13, **characterized in that** two of said stools (102a-102b) are installed on the bottom of the port, in such a manner that the crane (103) can assemble one wind turbine (1) on a first stool (102a) while said catamaran boat (110) transports a previously-assembled wind turbine from a second stool (102b) on which it was assembled to its installation site, and then returns to place a new base on said second stool, with said crane then being able to assemble a new wind turbine on said second stool while the same catamaran-type boat transports the assembled wind turbine from the first stool to its installation and then places it thereon, and then handles and places a new base on said first stool, and so on.
